# EUROPEAN PATENT APPLICATION

(11) **EP 4 807 430 A1**
(43) Date of publication of application: **16.09.2026**
(21) Application number: 26162349.0
(22) Date of filing: 04.03.2026
(51) Int. Cl.: G02B 27/01, G02B 7/00, H05K 7/20

(54) **DISPLAY THERMAL STRAP FILM**

(30) Priority: 14.03.2025 US 202563772199 P; 27.02.2026 US 202619552994
(71) Applicant: Meta Platforms Technologies, LLC, Menlo Park, CA 94025 (US)
(72) Inventor: Choi, Jun Young, Menlo Park (US); Park, Kyung Won, Menlo Park (US); Wang, Zuoqian, Menlo Park (US); Deng, Nengxiu, Menlo Park (US); Moghaddam, Giti Karimi, Menlo Park (US); Hershey, Daniel, Menlo Park (US)
(74) Representative: Murgitroyd & Company

(57) **Abstract**

The disclosed display system may include a housing having an inner surface, and one or more display devices housed within the housing. The display system may also include a flexible heat spreader coupled to a surface of one of the display devices and the inner surface of the housing to thermally couple the display device to the housing. Various other methods, systems, and computer-readable media are also disclosed.

## Description

### TECHNICAL FIELD

The present disclosure relates generally to a display thermal strap film for extending the heat spreader to the head-mounted display (HMD) housing.

### BACKGROUND

A display module in electronic devices is a notable source of heat, primarily due to the high energy consumption required for its operation. This heat generation may adversely affect the performance and longevity of the device. Traditionally, cooling mechanisms such as fans or heat spreader sheets have been employed to manage this thermal output. Fans provide active cooling by circulating air to dissipate heat, while heat spreader sheets offer passive cooling by distributing heat across a larger surface area to facilitate more efficient heat dissipation. These techniques, while effective, come with their own set of challenges, including increased power consumption, noise generation, and potential design constraints. Therefore, there is a need for innovative cooling solutions that can effectively manage the heat produced by display modules without compromising the device's performance or design.

### SUMMARY

According to a first aspect, there is provided a display system comprising: a housing comprising an inner surface; a display device comprising a surface; and a heat spreader coupled to the surface and the inner surface to thermally couple the display device to the housing.

The display device may be configured to move within the housing. The heat spreader may comprise a flexible material.

The heat spreader may comprise a thermally conductive film in a strap.

A length of the strap may allow the display device to move within the housing.

The display device may be offset from the inner surface to define a space between the housing and the display device. The length of the strap may allow the strap to bend around the space.

The strap may comprise a connecting surface. A first portion of the connecting surface may be coupled to the surface. A second portion of the connecting surface may be coupled to the inner surface.

An orientation of the strap may correspond to a direction of movement for the display device.

The display device may be configured to move to adjust an inter-axial distance for a user.

The heat spreader may comprises at least one of: an aluminum material; a copper material; and/or a graphite film material.

The display system may further comprise a second display device comprising a second surface. The display system may further comprise a second heat spreader coupled to the second surface and the inner surface to thermally couple the second display device to the housing. The second display device may be identical or similar to the first display device. The second heat spreader may be identical or similar to the first heat spreader.

The second display device may be configured to move within the housing to adjust an inter-axial distance between the first display device and the second display device. Both the first and second display devices may be configured to move within the housing to adjust the inter-axial distance between the first display device and the second display device.

The second heat spreader may comprise a second flexible material and a second thermally conductive film in a second strap.

According to a second aspect, there is provided a head-mounted display comprising the display system of the first aspect.

According to a third aspect, there is provided a method comprising: attaching a heat spreader to an inner surface of a housing of a head-mounted display; attaching the heat spreader to a surface of a display device of the head-mounted display; and positioning the display device inside the housing.

### BRIEF DESCRIPTION OF THE DRAWINGS

The accompanying drawings illustrate a number of examples and are a part of the specification. Together with the following description, these drawings demonstrate and explain various principles of the present disclosure.
FIGS. 1A and 1B are schematic diagrams illustrating examples of a head-mounted display (HMD) and an HMD display.
FIGS. 2A-F are schematic diagrams illustrating various examples of a flexible heat spreader (e.g., display thermal strap film) in a display, according to certain aspects of the disclosure.
FIG. 3 is a flow diagram of an example method for producing a display device having a flexible heat spreader.
FIG. 4 is an illustration of an example artificial-reality system.
FIG. 5 is an illustration of an example artificial-reality system with a handheld device.
FIG. 6A is an illustration of example user interactions within an artificial-reality system.
FIG. 6B is an illustration of example user interactions within an artificial-reality system.
FIG. 7A is an illustration of example user interactions within an artificial-reality system.
FIG. 7B is an illustration of example user interactions within an artificial-reality system.
FIG. 8 is an illustration of an example wrist-wearable device of an artificial-reality system.
FIG. 9 is an illustration of an example wearable artificial-reality system.
FIG. 10 is an illustration of an example augmented-reality system.
FIG. 11A is an illustration of an example virtual-reality system.
FIG. 11B is an illustration of another perspective of the virtual-reality systems shown in FIG. 11A.
FIG. 12 is a block diagram showing system components of example artificial- and virtual-reality systems.

Throughout the drawings, identical reference characters and descriptions indicate similar, but not necessarily identical, elements. While the examples described herein are susceptible to various modifications and alternative forms, specific examples have been shown in the drawings and will be described in detail herein. However, the examples described herein are not intended to be limited to the particular forms disclosed. Rather, the present disclosure covers all modifications, equivalents, and alternatives falling within the scope of the appended claims.

### DETAILED DESCRIPTION

The subject disclosure relates to a display thermal strap film for extending the heat spreader to the head-mounted display (HMD) housing, thereby increasing its surface area for enhanced thermal dissipation. As will be explained in greater detail below, examples of the present disclosure may include a housing comprising an inner surface, a display device comprising a surface, and a heat spreader coupled to the surface and the inner surface to thermally couple the display device to the housing. The heat spreader, which may comprise a thermally conductive flexible film, may advantageously extend a surface area of the heat spreader to the HMD housing, allowing improved device performance by providing heat management in a space efficient manner that allows movement (for display adjustments) and further may not require active cooling.

Features from any of the embodiments and/or examples described herein may be used in combination with one another in accordance with the general principles described herein. These and other embodiments, examples, features, and advantages will be more fully understood upon reading the following detailed description in conjunction with the accompanying drawings and claims.

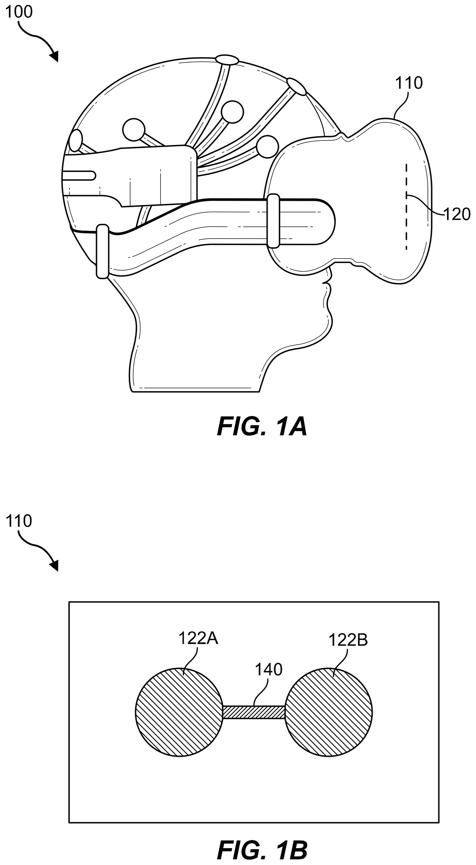

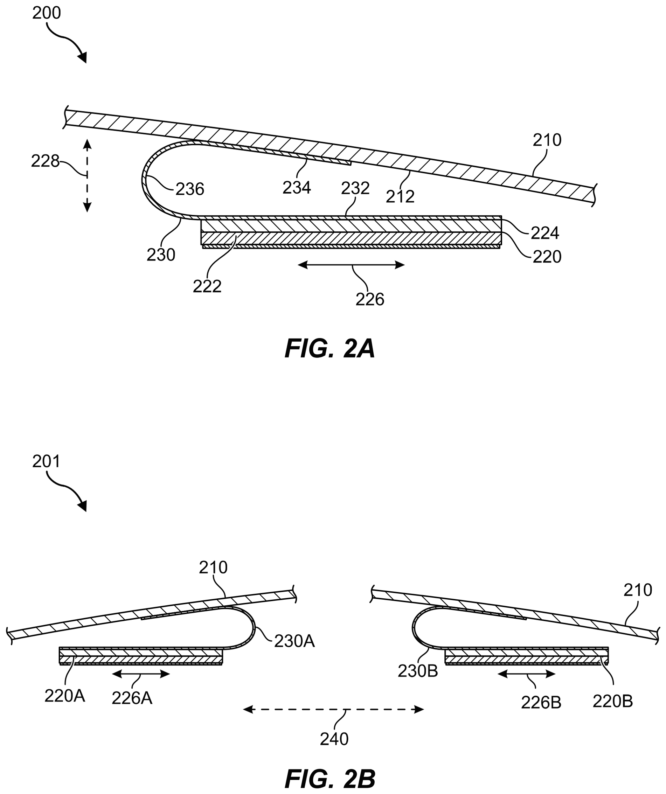

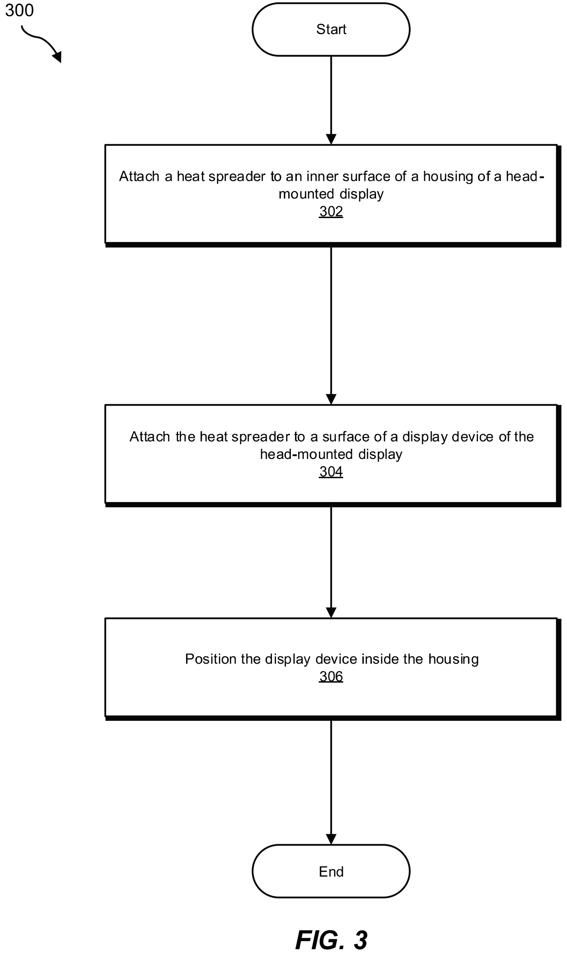

The following will provide, with reference to FIGS. 1-3, detailed descriptions of a display thermal strap film (e.g., a heat spreader). Detailed descriptions of example HMDs will be provided in connection with FIGS. 1A-1B. Detailed descriptions of example configurations for the heat spreader will be provided in connection with FIGS. 2A-2F. In addition, detailed descriptions of an example method of manufacture will be provided in connection with FIG. 3.

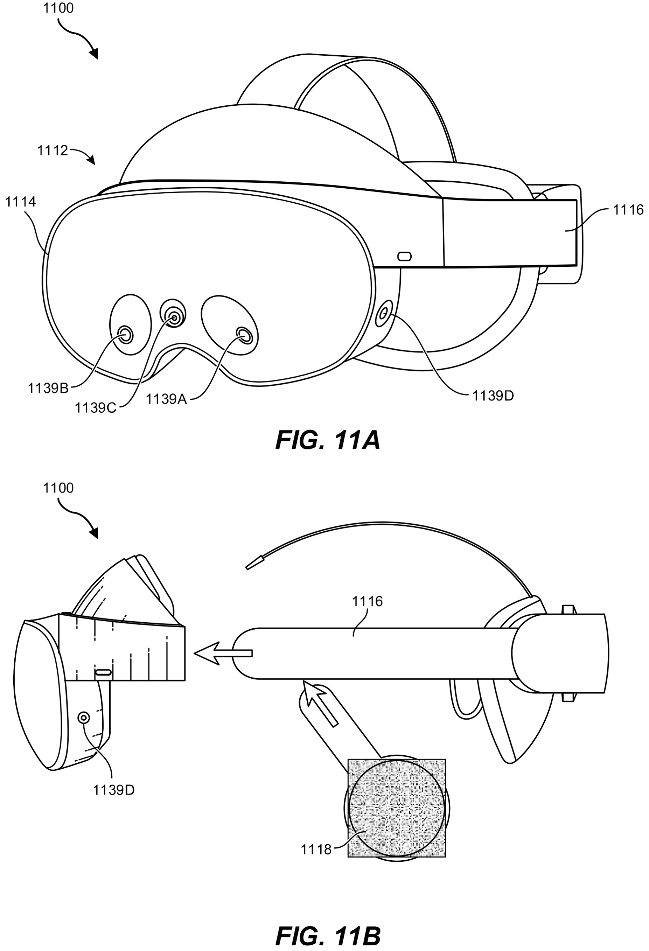

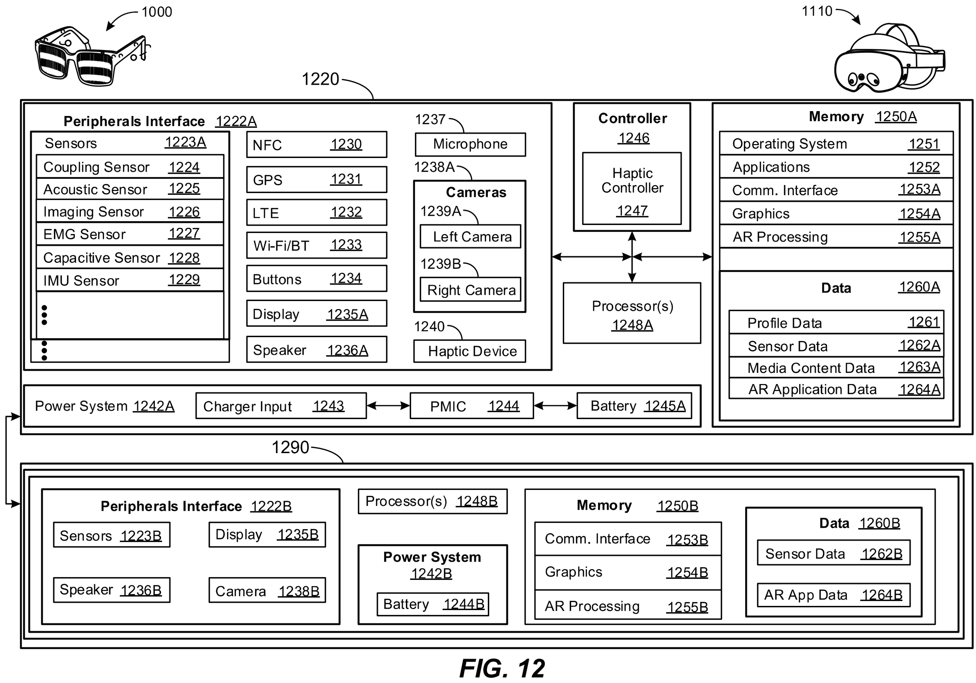

Turning now to the figures, FIGS. 1A and 1B are schematic diagrams illustrating examples of an HMD and an HMD display. FIG. 1A shows an example of an HMD 100 such as an MR or a VR device having a display module (corresponding to devices in FIGS. 11 and 12 described further below). FIG. 1A illustrates HMD 100 having a housing 110, and internally a display device 120 (e.g., a display module and/or eyepiece that may include light output device and/or lens assembly, corresponding to display described with respect to FIGS. 11 and 12 described further below).

FIG. 1B shows housing 110 having a pair of display modules (e.g., display device 122A and display device 122B) having an inter-axial distance (IAD) 140 therebetween. HMD 100 may have mechanism for allowing display device 122A and/or display device 122B to move within housing 110 to adjust IAD 140. IAD adjustments in HMDs may be crucial for optimizing visual comfort and clarity. Proper adjustment of the IAD ensures that the lenses align correctly with the user's eyes, which may be essential for creating a clear and immersive visual experience.

When the IAD is not correctly set, users may experience visual discomfort, such as blurriness, eye strain, or headaches. This misalignment can occur because the lenses are not positioned to match the user's interpupillary distance (IPD), which is the distance between the centers of the pupils of the eyes. Adjusting the IAD to match the IPD allows the lenses to focus light correctly onto the user's retinas, providing a clear and comfortable view.

HMD 100 may include mechanisms (e.g., tracks/rails, gears, frames, attachments, etc.) for adjusting the IAD. Non-limiting examples include manual mechanisms, where the user physically moves one or both lenses, or automated mechanisms, where sensors detect the user's IPD and adjust the lenses accordingly (e.g., using controllable motors/actuators). In some examples, HMD 100 may implement software-based adjustments that may fine-tune the visual output to match the user's IPD. Ensuring the correct IAD adjustment may be particularly important in VR and augmented reality (AR) applications, where prolonged use can exacerbate discomfort if the visual alignment is not optimal. Proper IAD adjustment enhances the overall user experience by reducing visual fatigue and improving the realism and immersion of the virtual environment. Thus, display device 122A and display device 122B may be configured to move within housing 110 without obstruction to allow IAD adjustments.

Turning now to FIGS. 2A-2F, FIGS. 2A-2F illustrate schematic diagrams of various examples of a display thermal strap film, from a generally top-down view, according to certain aspects of the disclosure. A heat spreader as described herein may include or otherwise incorporate a thermal strap film, which may be a flexible strap capable of thermally coupling a display module to an HMD body. The flexible thermal strap may remove or otherwise conduct the heat generated by the display module to the HMD without a need for a fan or other conventional heat removal mechanisms that may undesirably take space and add to manufacturing costs as well as present reliability issues. In some implementations, the flexibility of the disclosed thermal strap may be bent to allow movement of the HMD display used for proper IAD adjustment. Additionally, the disclosed flexible design of the thermal strap may allow for optimal thermal management by expanding the heat spreader to the HMD housing, thereby increasing its surface area for enhanced thermal dissipation.

Examples of suitable materials for the disclosed thermal strap include aluminum, copper and graphite films. For example, aluminum foils with air gaps, copper foils with air gaps, and/or graphite foils (e.g., PGS) may be used, although in other examples other thermally conductive and flexible materials may be used.

FIG. 2A illustrates a display system 200 (e.g., corresponding to HMD 100 and/or portions thereof) including a housing 210 (corresponding to housing 110), and a display device 220 (corresponding to display device 120). As illustrated in FIG. 2A, display device 220 may move within housing 210 to allow an IAD adjustment 226 (e.g., along a particular axis). Display device 220 may be positioned with an offset 228 from housing 210. Offset 228 may be measured from any appropriate measurement points (e.g., an edge of display device 220 at a particular IAD adjustment). Offset 228 may define a space between housing 210 and display device 220, which may allow for air and/or other components (not illustrated).

Display device 220 may include a lens assembly 222 on a user side of housing 210, and a surface 224 opposite lens assembly 222. Surface 224 may correspond to a heat generating surface of display device 220. A heat spreader 230 may correspond to a thermal film (e.g., made of a thermally conductive material that may be made flexible as described herein) which may be in a strap shape (e.g., having a length generally greater than a width) and a suitable thickness to provide thermal conductivity while remaining flexible enough to allow a bend 236.

As illustrated in FIG. 2A, a portion 232 of heat spreader 230 (e.g., one end of the strap) may be coupled to surface 224 of display device 220 through any appropriate thermally conductive adhesive and/or other mechanical connection. A portion 234 of heat spreader 230 (e.g., another end of the strap) may be coupled to an inner surface 212 of housing 210 through any appropriate thermally conductive adhesive and/or other mechanical connection.

In some examples, portion 232 may cover more than half and/or all of surface 224, and/or other portions (e.g., sides of display device 220). Portion 234 may attach to housing 210 at a location which may be generally aligned with display device 220 (e.g., at a location that allows heat spreader 230 to not be tangled as display device 220 moves). A length of heat spreader 230 may allow display device 220 to move (e.g., forming bend 236 around the space between display device 220 and housing 210) without being hindered by heat spreader 230, which may further be oriented (e.g., lengthwise) along an axis of IAD adjustment 226, although in other implementations may be oriented in other directions. Additionally and/or alternatively, heat spreader 230 may comprise more than one strap, which may be configured as similar straps or different straps (e.g., one or more of the strap configurations described herein).

Accordingly, heat spreader 230 may thermally couple display device 220 to housing 210, increasing a total surface area for mitigating heat generated by display device 220. For instance, the surface area of heat spreader 230 and housing 210 may act as a heat spreader for display device 220. In some examples, a portion of housing 210 may also be configured with a thermally conductive material (e.g., portions coupled to heat spreader 230). For example, portions of housing 210 may be made of a more thermally conductive material as a remainder of housing 210 and/or may incorporate other thermal management techniques. Additionally and/or alternatively, heat spreader 230 may be coupled to other surfaces, such as other generally rigid surfaces of or within and/or outside of housing 210. FIG. 2A illustrates an example configuration for heat spreader 230, although in other examples other configurations may be used, with non-limiting examples explained below in connection with FIGS. 2B-2F.

FIG. 2B illustrates a display system 201 (e.g., corresponding to HMD 100 and/or portions thereof), of an example configuration of two display devices 220A and 220B (e.g., for left and right eyes), each capable of respective IAD adjustment 226A and IAD adjustment 226B for adjusting IAD 240 therebetween. In addition, each of display device 220A and display device 220B may be coupled to housing 210 with a respective heat spreader 230A and heat spreader 230B. FIG. 2B illustrates generally similar configurations for heat spreader 230A and heat spreader 230B, although in other examples heat spreader 230A and heat spreader 230B may use different configurations.

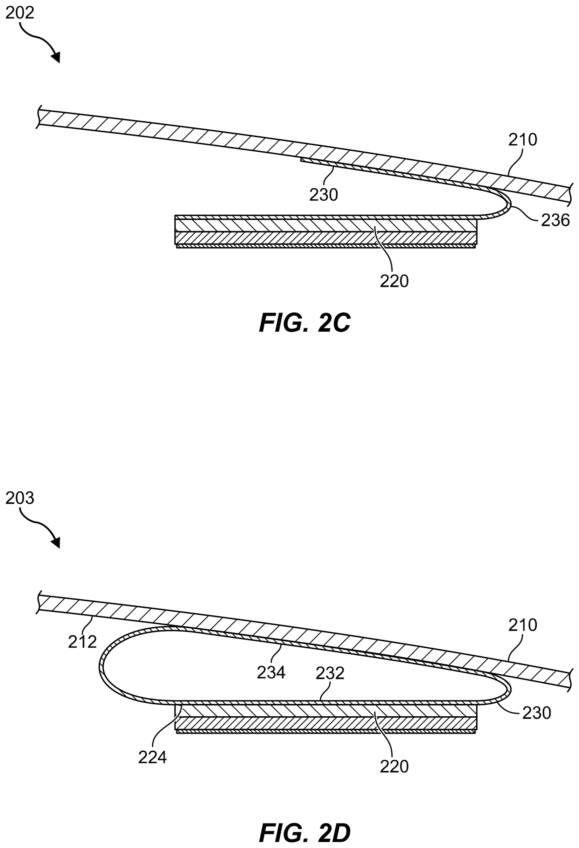

FIG. 2C illustrates a display system 202 (e.g., corresponding to HMD 100 and/or portions thereof) of another example configuration of heat spreader 230. Whereas in FIGS. 2A and 2B, bend 236 may be oriented near a center of the HMD, in FIG. 2C, bend 236 may be oriented near away from the center of the HMD (e.g., outer sides of the HMD).

FIG. 2D illustrates a display system 203 (e.g., corresponding to HMD 100 and/or portions thereof) of another example configuration of heat spreader 230. In FIG. 2D, heat spreader 230 may be a loop rather than a strap, such that portion 232 and portion 234 correspond to sections of the loop. Alternatively, heat spreader 230 may comprise two separate straps forming the loop (e.g., two overlapping straps).

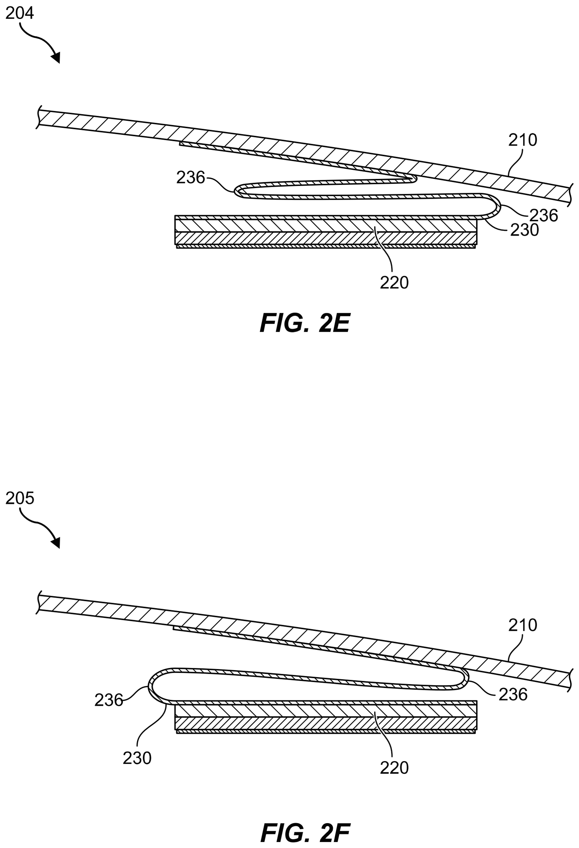

FIG. 2E illustrates a display system 204 (e.g., corresponding to HMD 100 and/or portions thereof) of another example configuration of heat spreader 230. Heat spreader 230 may include more than one bend 236. FIG. 2F illustrates a display system 205 (e.g., corresponding to HMD 100 and/or portions thereof) of another example configuration of heat spreader 230. In FIG. 2E, bends 236 may be in an alternative configuration. In addition, although not illustrated in FIGS. 2E or 2F, additionally guiding elements may facilitate multiple bends 236 without heat spreader 230 folding onto itself.

Turning now to FIG. 3, FIG. 3 is a flow diagram of an example method 300 for manufacturing a display system with the heat spreader described herein. The steps shown in FIG. 3 may be performed by any suitable manufacturing system. In one example, each of the steps shown in FIG. 3 may represent an algorithm whose structure includes and/or is represented by multiple sub-steps, examples of which will be provided in greater detail below.

As illustrated in FIG. 3 at step 302 one or more of the systems described herein may attach a heat spreader to an inner surface of a housing of a head-mounted display. For example, heat spreader 230 (e.g., portion 234) may be attached to housing 210 (e.g., inner surface 212).

At step 304 one or more of the systems described herein may attach the heat spreader to a surface of a display device of the head-mounted display. For example, heat spreader 230 (e.g., portion 232) may be attached to display device 220 (e.g., surface 224).

At step 306 one or more of the systems described herein may position the display device inside the housing. For example, display device 220 may be affixed within housing 210 so as to remain secure within housing 210 yet movable to IAD adjustment 226.

The display module is a significant heat source, and it is crucial to cool it down to maintain optimal display performance, even in the most adverse conditions. In pursuit of a slim design, removing the passive fan from the device, may make thermal dissipation an even more critical consideration.

To enhance thermal dissipation, it is essential to maximize the heat spreader's surface area. However, in the context of Head-Mounted Displays (HMDs), this poses a challenge due to the need for display adjustment to accommodate Inter-Axial Distance (IAD) variations.

The present disclosure provides for extending the heat spreader to the HMD housing, thereby increasing its surface area for enhanced thermal dissipation. Additionally, this design allows for the display to be moved within the device, accommodating Inter-Axial Distance (IAD) adjustments while maintaining optimal thermal management.

The heat spreader material may be designed to be flexible, allowing for optimal thermal management while considering cost and performance factors. Suitable materials include: aluminum (which may offer a balance between cost and thermal conductivity), copper (which may provide high thermal conductivity at a moderate cost), and/or graphite films (which may offer excellent thermal conductivity at a relatively low cost). This flexibility in material selection enables the design to adapt to various thermal conditions and budget constraints.

The disclosed technology provides considerable benefits with specific moving components including displays and can be implemented, for example, on mixed reality (MR) devices including extended reality (XR) and virtual reality (VR) devices. The application of the subject technology is not limited to the MR devices and can be expanded to all moving components with a heat source.

In an aspect, the subject technology includes using a thermal strap configured to remove the heat generated by the display module without a need for a fan or other conventional heat removal mechanisms. In an aspect, the thermal strap is flexible and allows movement of the HMD display to accommodate IAD adjustment. In an aspect, the thermal strap is made of a suitable material including copper, aluminum or a graphite film. In an aspect, the thermal strap is a heat spreader and allows spreading the heat removal to the HMD housing. In an aspect, the thermal strap is capable of replacing conventional heat removal systems including fans used to remove heat generated by the HMD display. In an aspect, the thermal strap thermally couples the display module to the HMD housing.

Embodiments of the present disclosure may include or be implemented in conjunction with various types of Artificial-Reality (AR) systems. AR may be any superimposed functionality and/or sensory-detectable content presented by an artificial-reality system within a user's physical surroundings. In other words, AR is a form of reality that has been adjusted in some manner before presentation to a user. AR can include and/or represent virtual reality (VR), augmented reality, mixed AR (MAR), or some combination and/or variation of these types of realities. Similarly, AR environments may include VR environments (including non-immersive, semi-immersive, and fully immersive VR environments), augmented-reality environments (including marker-based augmented-reality environments, markerless augmented-reality environments, location-based augmented-reality environments, and projection-based augmented-reality environments), hybrid-reality environments, and/or any other type or form of mixed- or alternative-reality environments.

AR content may include completely computer-generated content or computer-generated content combined with captured (e.g., real-world) content. Such AR content may include video, audio, haptic feedback, or some combination thereof, any of which may be presented in a single channel or in multiple channels (such as stereo video that produces a three-dimensional (3D) effect to the viewer). Additionally, In some examples, AR may also be associated with applications, products, accessories, services, or some combination thereof, that are used to, for example, create content in an artificial reality and/or are otherwise used in (e.g., to perform activities in) an artificial reality.

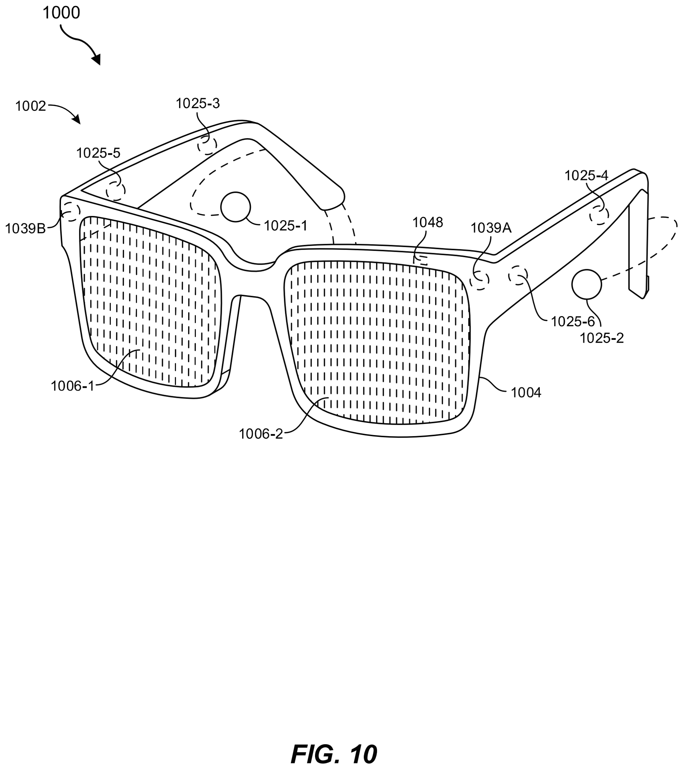

AR systems may be implemented in a variety of different form factors and configurations. Some AR systems may be designed to work without near-eye displays (NEDs). Other AR systems may include a NED that also provides visibility into the real world (such as, e.g., augmented-reality system 1000 in FIG. 10) or that visually immerses a user in an artificial reality (such as, e.g., virtual-reality system 1100 in FIGS. 11A and 11B). While some AR devices may be self-contained systems, other AR devices may communicate and/or coordinate with external devices to provide an AR experience to a user. Examples of such external devices include handheld controllers, mobile devices, desktop computers, devices worn by a user, devices worn by one or more other users, and/or any other suitable external system.

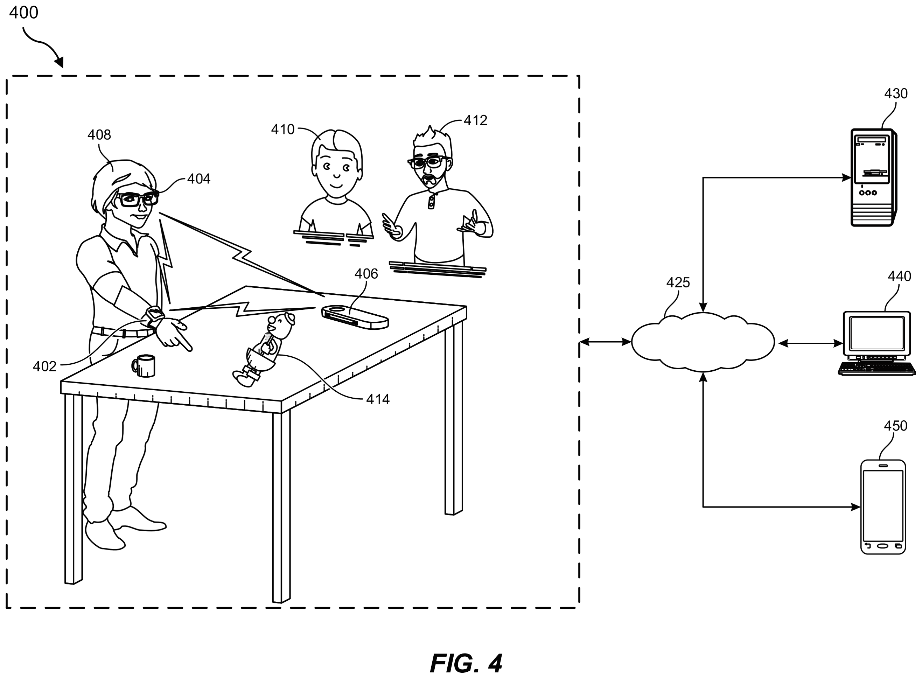

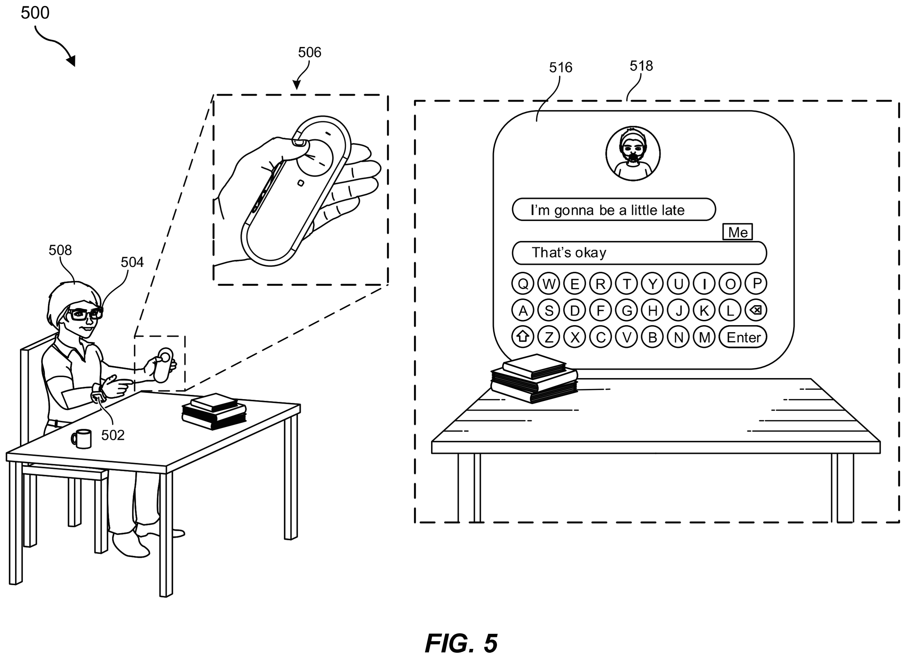

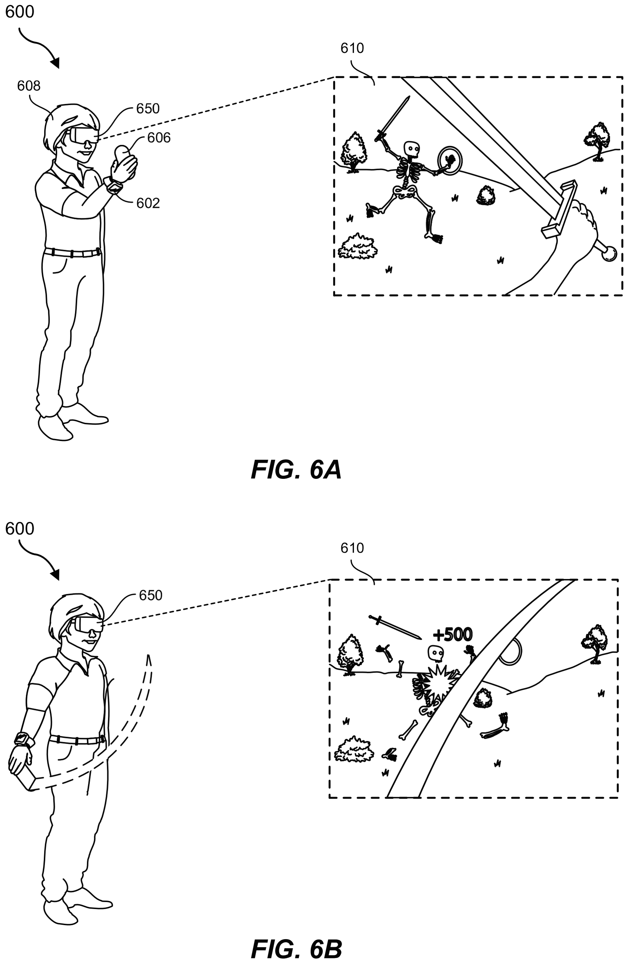

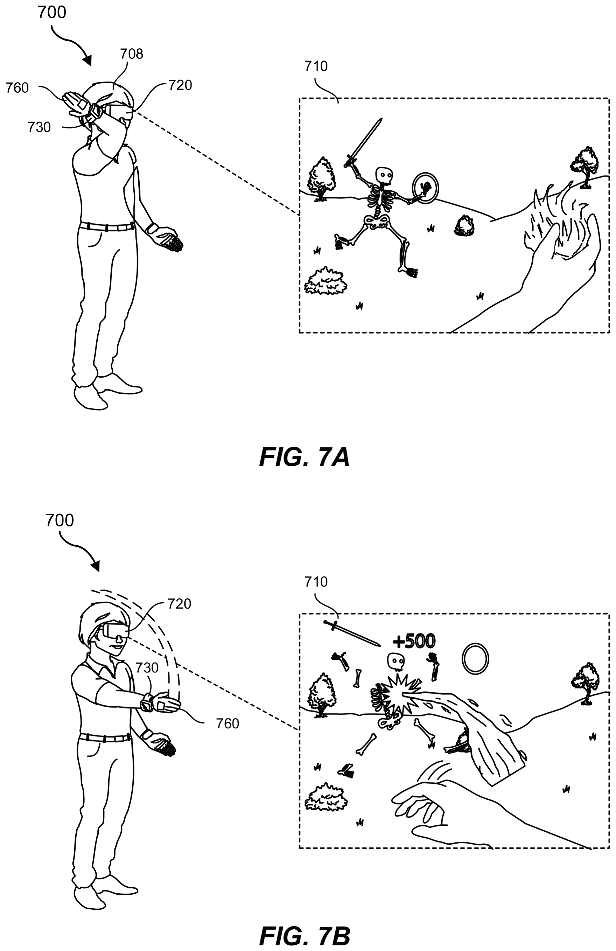

FIGS. 4-7B illustrate example artificial-reality (AR) systems. FIG. 4 shows a first AR system 400 and first example user interactions using a wrist-wearable device 402, a head-wearable device (e.g., AR glasses 1000), and/or a handheld intermediary processing device (HIPD) 406. FIG. 5 shows a second AR system 500 and second example user interactions using a wrist-wearable device 502, AR glasses 504, and/or an HIPD 506. FIGS. 6A and 6B show a third AR system 600 and third example user 608 interactions using a wrist-wearable device 602, a head-wearable device (e.g., VR headset 650), and/or an HIPD 606. FIGS. 7A and 7B show a fourth AR system 700 and fourth example user 708 interactions using a wrist-wearable device 730, VR headset 720, and/or a haptic device 760 (e.g., wearable gloves).

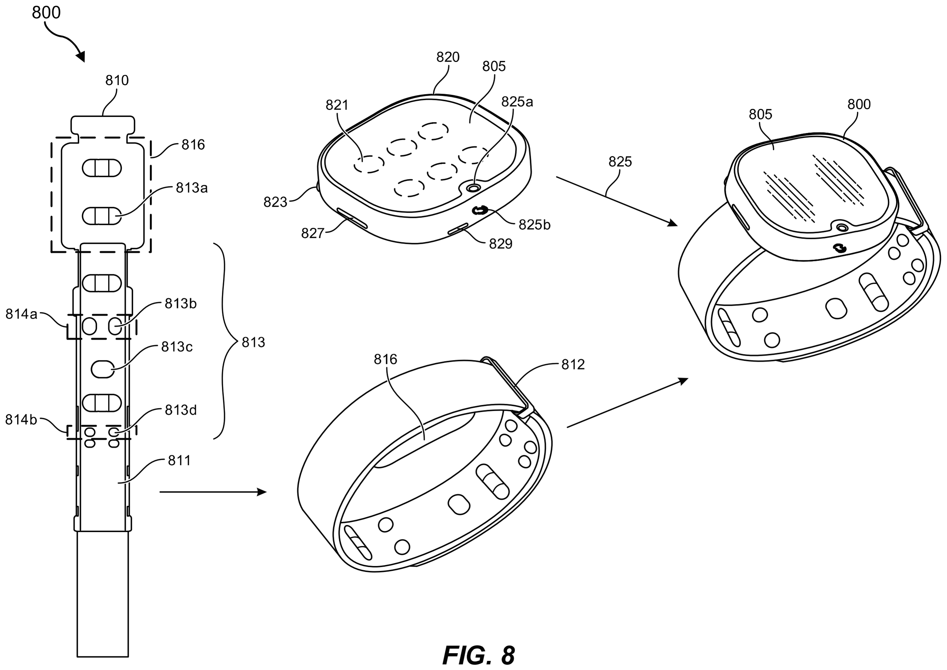

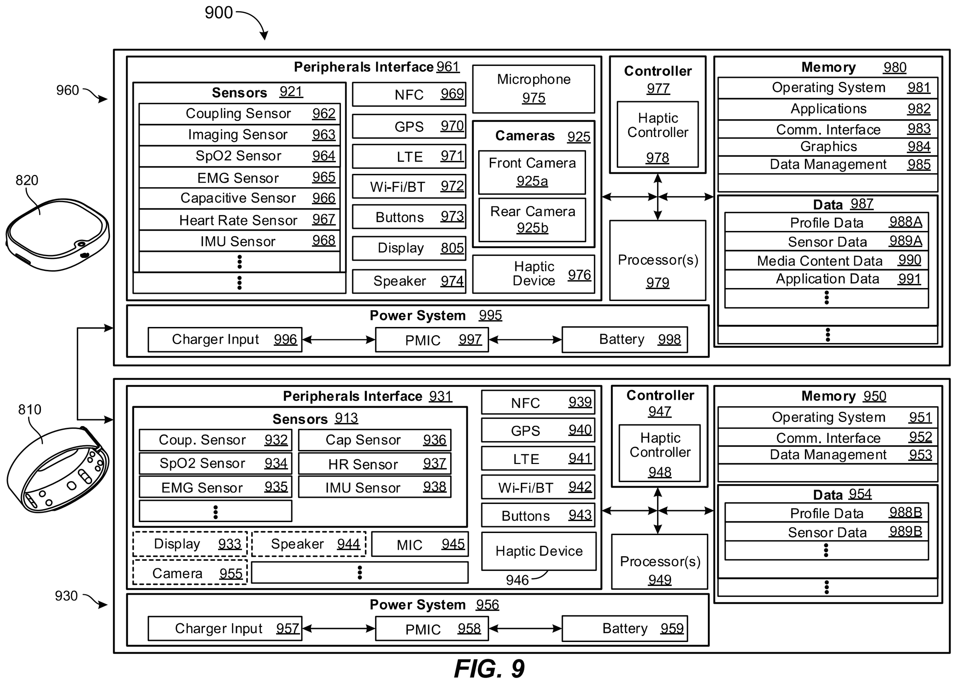

A wrist-wearable device 800, which can be used for wrist-wearable device 402, 502, 602, 730, and one or more of its components, are described below in reference to FIGS. 8 and 9; head-wearable devices 1000 and 1100, which can respectively be used for AR glasses 404, 504 or VR headset 650, 720, and their one or more components are described below in reference to FIGS. 10-12.

Referring to FIG. 4, wrist-wearable device 402, AR glasses 404, and/or HIPD 406 can communicatively couple via a network 425 (e.g., cellular, near field, Wi-Fi, personal area network, wireless LAN, etc.). Additionally, wrist-wearable device 402, AR glasses 404, and/or HIPD 406 can also communicatively couple with one or more servers 430, computers 440 (e.g., laptops, computers, etc.), mobile devices 450 (e.g., smartphones, tablets, etc.), and/or other electronic devices via network 425 (e.g., cellular, near field, Wi-Fi, personal area network, wireless LAN, etc.).

In FIG. 4, a user 408 is shown wearing wrist-wearable device 402 and AR glasses 404 and having HIPD 406 on their desk. The wrist-wearable device 402, AR glasses 404, and HIPD 406 facilitate user interaction with an AR environment. In particular, as shown by first AR system 400, wrist-wearable device 402, AR glasses 404, and/or HIPD 406 cause presentation of one or more avatars 410, digital representations of contacts 412, and virtual objects 414. As discussed below, user 408 can interact with one or more avatars 410, digital representations of contacts 412, and virtual objects 414 via wrist-wearable device 402, AR glasses 404, and/or HIPD 406.

User 408 can use any of wrist-wearable device 402, AR glasses 404, and/or HIPD 406 to provide user inputs. For example, user 408 can perform one or more hand gestures that are detected by wrist-wearable device 402 (e.g., using one or more EMG sensors and/or IMUs, described below in reference to FIGS. 8 and 9) and/or AR glasses 404 (e.g., using one or more image sensor or camera, described below in reference to FIGS. 10-10) to provide a user input. Alternatively, or additionally, user 408 can provide a user input via one or more touch surfaces of wrist-wearable device 402, AR glasses 404, HIPD 406, and/or voice commands captured by a microphone of wrist-wearable device 402, AR glasses 404, and/or HIPD 406. In some examples, wrist-wearable device 402, AR glasses 404, and/or HIPD 406 include a digital assistant to help user 408 in providing a user input (e.g., completing a sequence of operations, suggesting different operations or commands, providing reminders, confirming a command, etc.). In some examples, user 408 can provide a user input via one or more facial gestures and/or facial expressions. For example, cameras of wrist-wearable device 402, AR glasses 404, and/or HIPD 406 can track eyes of user 408 for navigating a user interface.

Wrist-wearable device 402, AR glasses 404, and/or HIPD 406 can operate alone or in conjunction to allow user 408 to interact with the AR environment. In some examples, HIPD 406 is configured to operate as a central hub or control center for the wrist-wearable device 402, AR glasses 404, and/or another communicatively coupled device. For example, user 408 can provide an input to interact with the AR environment at any of wrist-wearable device 402, AR glasses 404, and/or HIPD 406, and HIPD 406 can identify one or more back-end and front-end tasks to cause the performance of the requested interaction and distribute instructions to cause the performance of the one or more back-end and front-end tasks at wrist-wearable device 402, AR glasses 404, and/or HIPD 406. In some examples, a back-end task is a background processing task that is not perceptible by the user (e.g., rendering content, decompression, compression, etc.), and a front-end task is a user-facing task that is perceptible to the user (e.g., presenting information to the user, providing feedback to the user, etc.). As described below, HIPD 406 can perform the back-end tasks and provide wrist-wearable device 402 and/or AR glasses 404 operational data corresponding to the performed back-end tasks such that wrist-wearable device 402 and/or AR glasses 404 can perform the front-end tasks. In this way, HIPD 406, which has more computational resources and greater thermal headroom than wrist-wearable device 402 and/or AR glasses 404, performs computationally intensive tasks and reduces the computer resource utilization and/or power usage of wrist-wearable device 402 and/or AR glasses 404.

In the example shown by first AR system 400, HIPD 406 identifies one or more back-end tasks and front-end tasks associated with a user request to initiate an AR video call with one or more other users (represented by avatar 410 and the digital representation of contact 412) and distributes instructions to cause the performance of the one or more back-end tasks and front-end tasks. In particular, HIPD 406 performs back-end tasks for processing and/or rendering image data (and other data) associated with the AR video call and provides operational data associated with the performed back-end tasks to AR glasses 404 such that the AR glasses 404 perform front-end tasks for presenting the AR video call (e.g., presenting avatar 410 and digital representation of contact 412).

In some examples, HIPD 406 can operate as a focal or anchor point for causing the presentation of information. This allows user 408 to be generally aware of where information is presented. For example, as shown in first AR system 400, avatar 410 and the digital representation of contact 412 are presented above HIPD 406. In particular, HIPD 406 and AR glasses 404 operate in conjunction to determine a location for presenting avatar 410 and the digital representation of contact 412. In some examples, information can be presented a predetermined distance from HIPD 406 (e.g., within 5 meters). For example, as shown in first AR system 400, virtual object 414 is presented on the desk some distance from HIPD 406. Similar to the above example, HIPD 406 and AR glasses 404 can operate in conjunction to determine a location for presenting virtual object 414. Alternatively, In some examples, presentation of information is not bound by HIPD 406. More specifically, avatar 410, digital representation of contact 412, and virtual object 414 do not have to be presented within a predetermined distance of HIPD 406.

User inputs provided at wrist-wearable device 402, AR glasses 404, and/or HIPD 406 are coordinated such that the user can use any device to initiate, continue, and/or complete an operation. For example, user 408 can provide a user input to AR glasses 404 to cause AR glasses 404 to present virtual object 414 and, while virtual object 414 is presented by AR glasses 404, user 408 can provide one or more hand gestures via wrist-wearable device 402 to interact and/or manipulate virtual object 414.

FIG. 5 shows a user 508 wearing a wrist-wearable device 502 and AR glasses 504, and holding an HIPD 506. In second AR system 500, the wrist-wearable device 502, AR glasses 504, and/or HIPD 506 are used to receive and/or provide one or more messages to a contact of user 508. In particular, wrist-wearable device 502, AR glasses 504, and/or HIPD 506 detect and coordinate one or more user inputs to initiate a messaging application and prepare a response to a received message via the messaging application.

In some examples, user 508 initiates, via a user input, an application on wrist-wearable device 502, AR glasses 504, and/or HIPD 506 that causes the application to initiate on at least one device. For example, in second AR system 500, user 508 performs a hand gesture associated with a command for initiating a messaging application (represented by messaging user interface 516), wrist-wearable device 502 detects the hand gesture and, based on a determination that user 508 is wearing AR glasses 504, causes AR glasses 504 to present a messaging user interface 516 of the messaging application. AR glasses 504 can present messaging user interface 516 to user 508 via its display (e.g., as shown by a field of view 518 of user 508). In some examples, the application is initiated and executed on the device (e.g., wrist-wearable device 502, AR glasses 504, and/or HIPD 506) that detects the user input to initiate the application, and the device provides another device operational data to cause the presentation of the messaging application. For example, wrist-wearable device 502 can detect the user input to initiate a messaging application, initiate and run the messaging application, and provide operational data to AR glasses 504 and/or HIPD 506 to cause presentation of the messaging application. Alternatively, the application can be initiated and executed at a device other than the device that detected the user input. For example, wrist-wearable device 502 can detect the hand gesture associated with initiating the messaging application and cause HIPD 506 to run the messaging application and coordinate the presentation of the messaging application.

Further, user 508 can provide a user input provided at wrist-wearable device 502, AR glasses 504, and/or HIPD 506 to continue and/or complete an operation initiated at another device. For example, after initiating the messaging application via wrist-wearable device 502 and while AR glasses 504 present messaging user interface 516, user 508 can provide an input at HIPD 506 to prepare a response (e.g., shown by the swipe gesture performed on HIPD 506). Gestures performed by user 508 on HIPD 506 can be provided and/or displayed on another device. For example, a swipe gestured performed on HIPD 506 is displayed on a virtual keyboard of messaging user interface 516 displayed by AR glasses 504.

In some examples, wrist-wearable device 502, AR glasses 504, HIPD 506, and/or any other communicatively coupled device can present one or more notifications to user 508. The notification can be an indication of a new message, an incoming call, an application update, a status update, etc. User 508 can select the notification via wrist-wearable device 502, AR glasses 504, and/or HIPD 506 and can cause presentation of an application or operation associated with the notification on at least one device. For example, user 508 can receive a notification that a message was received at wrist-wearable device 502, AR glasses 504, HIPD 506, and/or any other communicatively coupled device and can then provide a user input at wrist-wearable device 502, AR glasses 504, and/or HIPD 506 to review the notification, and the device detecting the user input can cause an application associated with the notification to be initiated and/or presented at wrist-wearable device 502, AR glasses 504, and/or HIPD 506.

While the above example describes coordinated inputs used to interact with a messaging application, user inputs can be coordinated to interact with any number of applications including, but not limited to, gaming applications, social media applications, camera applications, web-based applications, financial applications, etc. For example, AR glasses 504 can present to user 508 game application data, and HIPD 506 can be used as a controller to provide inputs to the game. Similarly, user 508 can use wrist-wearable device 502 to initiate a camera of AR glasses 504, and user 508 can use wrist-wearable device 502, AR glasses 504, and/or HIPD 506 to manipulate the image capture (e.g., zoom in or out, apply filters, etc.) and capture image data.

Users may interact with the devices disclosed herein in a variety of ways. For example, as shown in FIGS. 6A and 6B, a user 608 may interact with an AR system 600 by donning a VR headset 650 while holding HIPD 606 and wearing wrist-wearable device 602. In this example, AR system 600 may enable a user to interact with a game 610 by swiping their arm. One or more of VR headset 650, HIPD 606, and wrist-wearable device 602 may detect this gesture and, in response, may display a sword strike in game 610. Similarly, in FIGS. 7A and 7B, a user 708 may interact with an AR system 700 by donning a VR headset 720 while wearing haptic device 760 and wrist-wearable device 730. In this example, AR system 700 may enable a user to interact with a game 710 by swiping their arm. One or more of VR headset 720, haptic device 760, and wrist-wearable device 730 may detect this gesture and, in response, may display a spell being cast in game 610.

Having discussed example AR systems, devices for interacting with such AR systems and other computing systems more generally will now be discussed in greater detail. Some explanations of devices and components that can be included in some or all of the example devices discussed below are explained herein for ease of reference. Certain types of the components described below may be more suitable for a particular set of devices, and less suitable for a different set of devices. But subsequent reference to the components explained here should be considered to be encompassed by the descriptions provided.

In some examples discussed below, example devices and systems, including electronic devices and systems, will be addressed. Such example devices and systems are not intended to be limiting, and one of skill in the art will understand that alternative devices and systems to the example devices and systems described herein may be used to perform the operations and construct the systems and devices that are described herein.

An electronic device may be a device that uses electrical energy to perform a specific function. An electronic device can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device may be a device that sits between two other electronic devices and/or a subset of components of one or more electronic devices and facilitates communication, data processing, and/or data transfer between the respective electronic devices and/or electronic components.

An integrated circuit may be an electronic device made up of multiple interconnected electronic components such as transistors, resistors, and capacitors. These components may be etched onto a small piece of semiconductor material, such as silicon. Integrated circuits may include analog integrated circuits, digital integrated circuits, mixed signal integrated circuits, and/or any other suitable type or form of integrated circuit. Examples of integrated circuits include application-specific integrated circuits (ASICs), processing units, central processing units (CPUs), co-processors, and accelerators.

Analog integrated circuits, such as sensors, power management circuits, and operational amplifiers, may process continuous signals and perform analog functions such as amplification, active filtering, demodulation, and mixing. Examples of analog integrated circuits include linear integrated circuits and radio frequency circuits.

Digital integrated circuits, which may be referred to as logic integrated circuits, may include microprocessors, microcontrollers, memory chips, interfaces, power management circuits, programmable devices, and/or any other suitable type or form of integrated circuit. In some examples, examples of integrated circuits include central processing units (CPUs),

Processing units, such as CPUs, may be electronic components that are responsible for executing instructions and controlling the operation of an electronic device (e.g., a computer). There are various types of processors that may be used interchangeably, or may be specifically required, by examples described herein. For example, a processor may be: (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) an accelerator, such as a graphics processing unit (GPU), designed to accelerate the creation and rendering of images, videos, and animations (e.g., virtual-reality animations, such as three-dimensional modeling); (iv) a field-programmable gate array (FPGA) that can be programmed and reconfigured after manufacturing and/or can be customized to perform specific tasks, such as signal processing, cryptography, and machine learning; and/or (v) a digital signal processor (DSP) designed to perform mathematical operations on signals such as audio, video, and radio waves. One or more processors of one or more electronic devices may be used in various examples described herein.

Memory generally refers to electronic components in a computer or electronic device that store data and instructions for the processor to access and manipulate. Examples of memory can include: (i) random access memory (RAM) configured to store data and instructions temporarily; (ii) read-only memory (ROM) configured to store data and instructions permanently (e.g., one or more portions of system firmware, and/or boot loaders) and/or semi-permanently; (iii) flash memory, which can be configured to store data in electronic devices (e.g., USB drives, memory cards, and/or solid-state drives (SSDs)); and/or (iv) cache memory configured to temporarily store frequently accessed data and instructions. Memory, as described herein, can store structured data (e.g., SQL databases, MongoDB databases, GraphQL data, JSON data, etc.). Other examples of data stored in memory can include (i) profile data, including user account data, user settings, and/or other user data stored by the user, (ii) sensor data detected and/or otherwise obtained by one or more sensors, (iii) media content data including stored image data, audio data, documents, and the like, (iv) application data, which can include data collected and/or otherwise obtained and stored during use of an application, and/or any other types of data described herein.

Controllers may be electronic components that manage and coordinate the operation of other components within an electronic device (e.g., controlling inputs, processing data, and/or generating outputs). Examples of controllers can include: (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs.

A power system of an electronic device may be configured to convert incoming electrical power into a form that can be used to operate the device. A power system can include various components, such as (i) a power source, which can be an alternating current (AC) adapter or a direct current (DC) adapter power supply, (ii) a charger input, which can be configured to use a wired and/or wireless connection (which may be part of a peripheral interface, such as a USB, micro-USB interface, near-field magnetic coupling, magnetic inductive and magnetic resonance charging, and/or radio frequency (RF) charging), (iii) a power-management integrated circuit, configured to distribute power to various components of the device and to ensure that the device operates within safe limits (e.g., regulating voltage, controlling current flow, and/or managing heat dissipation), and/or (iv) a battery configured to store power to provide usable power to components of one or more electronic devices.

Peripheral interfaces may be electronic components (e.g., of electronic devices) that allow electronic devices to communicate with other devices or peripherals and can provide the ability to input and output data and signals. Examples of peripheral interfaces can include (i) universal serial bus (USB) and/or micro-USB interfaces configured for connecting devices to an electronic device, (ii) Bluetooth interfaces configured to allow devices to communicate with each other, including Bluetooth low energy (BLE), (iii) near field communication (NFC) interfaces configured to be short-range wireless interfaces for operations such as access control, (iv) POGO pins, which may be small, spring-loaded pins configured to provide a charging interface, (v) wireless charging interfaces, (vi) GPS interfaces, (vii) Wi-Fi interfaces for providing a connection between a device and a wireless network, and/or (viii) sensor interfaces.

Sensors may be electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device), (ii) biopotential-signal sensors, (iii) inertial measurement units (e.g., IMUs) for detecting, for example, angular rate, force, magnetic field, and/or changes in acceleration, (iv) heart rate sensors for measuring a user's heart rate, (v) SpO2 sensors for measuring blood oxygen saturation and/or other biometric data of a user, (vi) capacitive sensors for detecting changes in potential at a portion of a user's body (e.g., a sensor-skin interface), and/or (vii) light sensors (e.g., time-of-flight sensors, infrared light sensors, visible light sensors, etc.).

Biopotential-signal-sensing components may be devices used to measure electrical activity within the body (e.g., biopotential-signal sensors). Some types of biopotential-signal sensors include (i) electroencephalography (EEG) sensors configured to measure electrical activity in the brain to diagnose neurological disorders, (ii) electrocardiography (ECG or EKG) sensors configured to measure electrical activity of the heart to diagnose heart problems, (iii) electromyography (EMG) sensors configured to measure the electrical activity of muscles and to diagnose neuromuscular disorders, and (iv) electrooculography (EOG) sensors configure to measure the electrical activity of eye muscles to detect eye movement and diagnose eye disorders.

An application stored in memory of an electronic device (e.g., software) may include instructions stored in the memory. Examples of such applications include (i) games, (ii) word processors, (iii) messaging applications, (iv) media-streaming applications, (v) financial applications, (vi) calendars. (vii) clocks, and (viii) communication interface modules for enabling wired and/or wireless connections between different respective electronic devices (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocols).

A communication interface may be a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, Bluetooth). In some examples, a communication interface can refer to a software layer that enables different software programs to communicate with each other (e.g., application programming interfaces (APIs), protocols like HTTP and TCP/IP, etc.).

A graphics module may be a component or software module that is designed to handle graphical operations and/or processes and can include a hardware module and/or a software module.

Non-transitory computer-readable storage media may be physical devices or storage media that can be used to store electronic data in a non-transitory form (e.g., such that the data is stored permanently until it is intentionally deleted or modified).

FIGS. 8 and 9 illustrate an example wrist-wearable device 800 and an example computer system 900. Wrist-wearable device 800 is an instance of wearable device 402 described in FIG. 4 herein, such that the wearable device 402 should be understood to have the features of the wrist-wearable device 800 and vice versa. FIG. 9 illustrates components of the wrist-wearable device 800, which can be used individually or in combination, including combinations that include other electronic devices and/or electronic components.

FIG. 8 shows a wearable band 810 and a watch body 820 (or capsule) being coupled, as discussed below, to form wrist-wearable device 800. Wrist-wearable device 800 can perform various functions and/or operations associated with navigating through user interfaces and selectively opening applications as well as the functions and/or operations described above with reference to FIGS. 4-7B.

As will be described in more detail below, operations executed by wrist-wearable device 800 can include (i) presenting content to a user (e.g., displaying visual content via a display 805), (ii) detecting (e.g., sensing) user input (e.g., sensing a touch on peripheral button 823 and/or at a touch screen of the display 805, a hand gesture detected by sensors (e.g., biopotential sensors)), (iii) sensing biometric data (e.g., neuromuscular signals, heart rate, temperature, sleep, etc.) via one or more sensors 813, messaging (e.g., text, speech, video, etc.); image capture via one or more imaging devices or cameras 825, wireless communications (e.g., cellular, near field, Wi-Fi, personal area network, etc.), location determination, financial transactions, providing haptic feedback, providing alarms, providing notifications, providing biometric authentication, providing health monitoring, providing sleep monitoring, etc.

The above-example functions can be executed independently in watch body 820, independently in wearable band 810, and/or via an electronic communication between watch body 820 and wearable band 810. In some examples, functions can be executed on wrist-wearable device 800 while an AR environment is being presented (e.g., via one of AR systems 400 to 700). The wearable devices described herein can also be used with other types of AR environments.

Wearable band 810 can be configured to be worn by a user such that an inner surface of a wearable structure 811 of wearable band 810 is in contact with the user's skin. In this example, when worn by a user, sensors 813 may contact the user's skin. In some examples, one or more of sensors 813 can sense biometric data such as a user's heart rate, a saturated oxygen level, temperature, sweat level, neuromuscular signals, or a combination thereof. One or more of sensors 813 can also sense data about a user's environment including a user's motion, altitude, location, orientation, gait, acceleration, position, or a combination thereof. In some examples, one or more of sensors 813 can be configured to track a position and/or motion of wearable band 810. One or more of sensors 813 can include any of the sensors defined above and/or discussed below with respect to FIG. 8.

One or more of sensors 813 can be distributed on an inside and/or an outside surface of wearable band 810. In some examples, one or more of sensors 813 are uniformly spaced along wearable band 810. Alternatively, In some examples, one or more of sensors 813 are positioned at distinct points along wearable band 810. As shown in FIG. 8, one or more of sensors 813 can be the same or distinct. For example, In some examples, one or more of sensors 813 can be shaped as a pill (e.g., sensor 813a), an oval, a circle a square, an oblong (e.g., sensor 813c) and/or any other shape that maintains contact with the user's skin (e.g., such that neuromuscular signal and/or other biometric data can be accurately measured at the user's skin). In some examples, one or more sensors of 813 are aligned to form pairs of sensors (e.g., for sensing neuromuscular signals based on differential sensing within each respective sensor). For example, sensor 813b may be aligned with an adjacent sensor to form sensor pair 814a and sensor 813d may be aligned with an adjacent sensor to form sensor pair 814b. In some examples, wearable band 810 does not have a sensor pair. Alternatively, In some examples, wearable band 810 has a predetermined number of sensor pairs (one pair of sensors, three pairs of sensors, four pairs of sensors, six pairs of sensors, sixteen pairs of sensors, etc.).

Wearable band 810 can include any suitable number of sensors 813. In some examples, the number and arrangement of sensors 813 depends on the particular application for which wearable band 810 is used. For instance, wearable band 810 can be configured as an armband, wristband, or chest-band that include a plurality of sensors 813 with different number of sensors 813, a variety of types of individual sensors with the plurality of sensors 813, and different arrangements for each use case, such as medical use cases as compared to gaming or general day-to-day use cases.

In accordance with some examples, wearable band 810 further includes an electrical ground electrode and a shielding electrode. The electrical ground and shielding electrodes, like the sensors 813, can be distributed on the inside surface of the wearable band 810 such that they contact a portion of the user's skin. For example, the electrical ground and shielding electrodes can be at an inside surface of a coupling mechanism 816 or an inside surface of a wearable structure 811. The electrical ground and shielding electrodes can be formed and/or use the same components as sensors 813. In some examples, wearable band 810 includes more than one electrical ground electrode and more than one shielding electrode.

Sensors 813 can be formed as part of wearable structure 811 of wearable band 810. In some examples, sensors 813 are flush or substantially flush with wearable structure 811 such that they do not extend beyond the surface of wearable structure 811. While flush with wearable structure 811, sensors 813 are still configured to contact the user's skin (e.g., via a skin-contacting surface). Alternatively, In some examples, sensors 813 extend beyond wearable structure 811 a predetermined distance (e.g., 0.1 - 2 mm) to make contact and depress into the user's skin. In some examples, sensors 813 are coupled to an actuator (not shown) configured to adjust an extension height (e.g., a distance from the surface of wearable structure 811) of sensors 813 such that sensors 813 make contact and depress into the user's skin. In some examples, the actuators adjust the extension height between 0.01 mm - 1.2 mm. This may allow a the user to customize the positioning of sensors 813 to improve the overall comfort of the wearable band 810 when worn while still allowing sensors 813 to contact the user's skin. In some examples, sensors 813 are indistinguishable from wearable structure 811 when worn by the user.

Wearable structure 811 can be formed of an elastic material, elastomers, etc., configured to be stretched and fitted to be worn by the user. In some examples, wearable structure 811 is a textile or woven fabric. As described above, sensors 813 can be formed as part of a wearable structure 811. For example, sensors 813 can be molded into the wearable structure 811, be integrated into a woven fabric (e.g., sensors 813 can be sewn into the fabric and mimic the pliability of fabric and can and/or be constructed from a series woven strands of fabric).

Wearable structure 811 can include flexible electronic connectors that interconnect sensors 813, the electronic circuitry, and/or other electronic components (described below in reference to FIG. 9) that are enclosed in wearable band 810. In some examples, the flexible electronic connectors are configured to interconnect sensors 813, the electronic circuitry, and/or other electronic components of wearable band 810 with respective sensors and/or other electronic components of another electronic device (e.g., watch body 820). The flexible electronic connectors are configured to move with wearable structure 811 such that the user adjustment to wearable structure 811 (e.g., resizing, pulling, folding, etc.) does not stress or strain the electrical coupling of components of wearable band 810.

As described above, wearable band 810 is configured to be worn by a user. In particular, wearable band 810 can be shaped or otherwise manipulated to be worn by a user. For example, wearable band 810 can be shaped to have a substantially circular shape such that it can be configured to be worn on the user's lower arm or wrist. Alternatively, wearable band 810 can be shaped to be worn on another body part of the user, such as the user's upper arm (e.g., around a bicep), forearm, chest, legs, etc. Wearable band 810 can include a retaining mechanism 812 (e.g., a buckle, a hook and loop fastener, etc.) for securing wearable band 810 to the user's wrist or other body part. While wearable band 810 is worn by the user, sensors 813 sense data (referred to as sensor data) from the user's skin. In some examples, sensors 813 of wearable band 810 obtain (e.g., sense and record) neuromuscular signals.

The sensed data (e.g., sensed neuromuscular signals) can be used to detect and/or determine the user's intention to perform certain motor actions. In some examples, sensors 813 may sense and record neuromuscular signals from the user as the user performs muscular activations (e.g., movements, gestures, etc.). The detected and/or determined motor actions (e.g., phalange (or digit) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on display 805 of wrist-wearable device 800 and/or can be transmitted to a device responsible for rendering an artificial-reality environment (e.g., a head-mounted display) to perform an action in an associated artificial-reality environment, such as to control the motion of a virtual device displayed to the user. The muscular activations performed by the user can include static gestures, such as placing the user's hand palm down on a table, dynamic gestures, such as grasping a physical or virtual object, and covert gestures that are imperceptible to another person, such as slightly tensing a joint by co-contracting opposing muscles or using sub-muscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by sensors 813 can be used to provide a user with an enhanced interaction with a physical object (e.g., devices communicatively coupled with wearable band 810) and/or a virtual object in an artificial-reality application generated by an artificial-reality system (e.g., user interface objects presented on the display 805, or another computing device (e.g., a smartphone)).

In some examples, wearable band 810 includes one or more haptic devices 946 (e.g., a vibratory haptic actuator) that are configured to provide haptic feedback (e.g., a cutaneous and/or kinesthetic sensation, etc.) to the user's skin. Sensors 813 and/or haptic devices 946 (shown in FIG. 9) can be configured to operate in conjunction with multiple applications including, without limitation, health monitoring, social media, games, and artificial reality (e.g., the applications associated with artificial reality).

Wearable band 810 can also include coupling mechanism 816 for detachably coupling a capsule (e.g., a computing unit) or watch body 820 (via a coupling surface of the watch body 820) to wearable band 810. For example, a cradle or a shape of coupling mechanism 816 can correspond to shape of watch body 820 of wrist-wearable device 800. In particular, coupling mechanism 816 can be configured to receive a coupling surface proximate to the bottom side of watch body 820 (e.g., a side opposite to a front side of watch body 820 where display 805 is located), such that a user can push watch body 820 downward into coupling mechanism 816 to attach watch body 820 to coupling mechanism 816. In some examples, coupling mechanism 816 can be configured to receive a top side of the watch body 820 (e.g., a side proximate to the front side of watch body 820 where display 805 is located) that is pushed upward into the cradle, as opposed to being pushed downward into coupling mechanism 816. In some examples, coupling mechanism 816 is an integrated component of wearable band 810 such that wearable band 810 and coupling mechanism 816 are a single unitary structure. In some examples, coupling mechanism 816 is a type of frame or shell that allows watch body 820 coupling surface to be retained within or on wearable band 810 coupling mechanism 816 (e.g., a cradle, a tracker band, a support base, a clasp, etc.).

Coupling mechanism 816 can allow for watch body 820 to be detachably coupled to the wearable band 810 through a friction fit, magnetic coupling, a rotation-based connector, a shear-pin coupler, a retention spring, one or more magnets, a clip, a pin shaft, a hook and loop fastener, or a combination thereof. A user can perform any type of motion to couple the watch body 820 to wearable band 810 and to decouple the watch body 820 from the wearable band 810. For example, a user can twist, slide, turn, push, pull, or rotate watch body 820 relative to wearable band 810, or a combination thereof, to attach watch body 820 to wearable band 810 and to detach watch body 820 from wearable band 810. Alternatively, as discussed below, In some examples, the watch body 820 can be decoupled from the wearable band 810 by actuation of a release mechanism 829.

Wearable band 810 can be coupled with watch body 820 to increase the functionality of wearable band 810 (e.g., converting wearable band 810 into wrist-wearable device 800, adding an additional computing unit and/or battery to increase computational resources and/or a battery life of wearable band 810, adding additional sensors to improve sensed data, etc.). As described above, wearable band 810 and coupling mechanism 816 are configured to operate independently (e.g., execute functions independently) from watch body 820. For example, coupling mechanism 816 can include one or more sensors 813 that contact a user's skin when wearable band 810 is worn by the user, with or without watch body 820 and can provide sensor data for determining control commands.

A user can detach watch body 820 from wearable band 810 to reduce the encumbrance of wrist-wearable device 800 to the user. For examples in which watch body 820 is removable, watch body 820 can be referred to as a removable structure, such that in these examples wrist-wearable device 800 includes a wearable portion (e.g., wearable band 810) and a removable structure (e.g., watch body 820).

Turning to watch body 820, in some examples watch body 820 can have a substantially rectangular or circular shape. Watch body 820 is configured to be worn by the user on their wrist or on another body part. More specifically, watch body 820 is sized to be easily carried by the user, attached on a portion of the user's clothing, and/or coupled to wearable band 810 (forming the wrist-wearable device 800). As described above, watch body 820 can have a shape corresponding to coupling mechanism 816 of wearable band 810. In some examples, watch body 820 includes a single release mechanism 829 or multiple release mechanisms (e.g., two release mechanisms 829 positioned on opposing sides of watch body 820, such as spring-loaded buttons) for decoupling watch body 820 from wearable band 810. Release mechanism 829 can include, without limitation, a button, a knob, a plunger, a handle, a lever, a fastener, a clasp, a dial, a latch, or a combination thereof.

A user can actuate release mechanism 829 by pushing, turning, lifting, depressing, shifting, or performing other actions on release mechanism 829. Actuation of release mechanism 829 can release (e.g., decouple) watch body 820 from coupling mechanism 816 of wearable band 810, allowing the user to use watch body 820 independently from wearable band 810 and vice versa. For example, decoupling watch body 820 from wearable band 810 can allow a user to capture images using rear-facing camera 825b. Although release mechanism 829 is shown positioned at a corner of watch body 820, release mechanism 829 can be positioned anywhere on watch body 820 that is convenient for the user to actuate. In addition, In some examples, wearable band 810 can also include a respective release mechanism for decoupling watch body 820 from coupling mechanism 816. In some examples, release mechanism 829 is optional and watch body 820 can be decoupled from coupling mechanism 816 as described above (e.g., via twisting, rotating, etc.).

Watch body 820 can include one or more peripheral buttons 823 and 827 for performing various operations at watch body 820. For example, peripheral buttons 823 and 827 can be used to turn on or wake (e.g., transition from a sleep state to an active state) display 805, unlock watch body 820, increase or decrease a volume, increase or decrease a brightness, interact with one or more applications, interact with one or more user interfaces, etc. Additionally or alternatively, In some examples, display 805 operates as a touch screen and allows the user to provide one or more inputs for interacting with watch body 820.

In some examples, watch body 820 includes one or more sensors 821. Sensors 821 of watch body 820 can be the same or distinct from sensors 813 of wearable band 810. Sensors 821 of watch body 820 can be distributed on an inside and/or an outside surface of watch body 820. In some examples, sensors 821 are configured to contact a user's skin when watch body 820 is worn by the user. For example, sensors 821 can be placed on the bottom side of watch body 820 and coupling mechanism 816 can be a cradle with an opening that allows the bottom side of watch body 820 to directly contact the user's skin. Alternatively, In some examples, watch body 820 does not include sensors that are configured to contact the user's skin (e.g., including sensors internal and/or external to the watch body 820 that are configured to sense data of watch body 820 and the surrounding environment). In some examples, sensors 821 are configured to track a position and/or motion of watch body 820.

Watch body 820 and wearable band 810 can share data using a wired communication method (e.g., a Universal Asynchronous Receiver/Transmitter (UART), a USB transceiver, etc.) and/or a wireless communication method (e.g., near field communication, Bluetooth, etc.). For example, watch body 820 and wearable band 810 can share data sensed by sensors 813 and 821, as well as application and device specific information (e.g., active and/or available applications, output devices (e.g., displays, speakers, etc.), input devices (e.g., touch screens, microphones, imaging sensors, etc.).

In some examples, watch body 820 can include, without limitation, a front-facing camera 825a and/or a rear-facing camera 825b, sensors 821 (e.g., a biometric sensor, an IMU, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 963), a touch sensor, a sweat sensor, etc.). In some examples, watch body 820 can include one or more haptic devices 976 (e.g., a vibratory haptic actuator) that is configured to provide haptic feedback (e.g., a cutaneous and/or kinesthetic sensation, etc.) to the user. Sensors 921 and/or haptic device 976 can also be configured to operate in conjunction with multiple applications including, without limitation, health monitoring applications, social media applications, game applications, and artificial reality applications (e.g., the applications associated with artificial reality).

As described above, watch body 820 and wearable band 810, when coupled, can form wrist-wearable device 800. When coupled, watch body 820 and wearable band 810 may operate as a single device to execute functions (operations, detections, communications, etc.) described herein. In some examples, each device may be provided with particular instructions for performing the one or more operations of wrist-wearable device 800. For example, in accordance with a determination that watch body 820 does not include neuromuscular signal sensors, wearable band 810 can include alternative instructions for performing associated instructions (e.g., providing sensed neuromuscular signal data to watch body 820 via a different electronic device). Operations of wrist-wearable device 800 can be performed by watch body 820 alone or in conjunction with wearable band 810 (e.g., via respective processors and/or hardware components) and vice versa. In some examples, operations of wrist-wearable device 800, watch body 820, and/or wearable band 810 can be performed in conjunction with one or more processors and/or hardware components.

As described below with reference to the block diagram of FIG. 9, wearable band 810 and/or watch body 820 can each include independent resources required to independently execute functions. For example, wearable band 810 and/or watch body 820 can each include a power source (e.g., a battery), a memory, data storage, a processor (e.g., a central processing unit (CPU)), communications, a light source, and/or input/output devices.

FIG. 9 shows block diagrams of a computing system 930 corresponding to wearable band 810 and a computing system 960 corresponding to watch body 820. Computing system 900 of wrist-wearable device 800 may include a combination of components of wearable band computing system 930 and watch body computing system 960.

Watch body 820 and/or wearable band 810 can include one or more components shown in watch body computing system 960. In some examples, a single integrated circuit may include all or a substantial portion of the components of watch body computing system 960 included in a single integrated circuit. Alternatively, In some examples, components of the watch body computing system 960 may be included in a plurality of integrated circuits that are communicatively coupled. In some examples, watch body computing system 960 may be configured to couple (e.g., via a wired or wireless connection) with wearable band computing system 930, which may allow the computing systems to share components, distribute tasks, and/or perform other operations described herein (individually or as a single device).

Watch body computing system 960 can include one or more processors 979, a controller 977, a peripherals interface 961, a power system 995, and memory (e.g., a memory 980).

Power system 995 can include a charger input 996, a power-management integrated circuit (PMIC) 997, and a battery 998. In some examples, a watch body 820 and a wearable band 810 can have respective batteries (e.g., battery 998 and 959) and can share power with each other. Watch body 820 and wearable band 810 can receive a charge using a variety of techniques. In some examples, watch body 820 and wearable band 810 can use a wired charging assembly (e.g., power cords) to receive the charge. Alternatively, or in addition, watch body 820 and/or wearable band 810 can be configured for wireless charging. For example, a portable charging device can be designed to mate with a portion of watch body 820 and/or wearable band 810 and wirelessly deliver usable power to battery 998 of watch body 820 and/or battery 959 of wearable band 810. Watch body 820 and wearable band 810 can have independent power systems (e.g., power system 995 and 956, respectively) to enable each to operate independently. Watch body 820 and wearable band 810 can also share power (e.g., one can charge the other) via respective PMICs (e.g., PMICs 997 and 958) and charger inputs (e.g., 957 and 996) that can share power over power and ground conductors and/or over wireless charging antennas.

In some examples, peripherals interface 961 can include one or more sensors 921. Sensors 921 can include one or more coupling sensors 962 for detecting when watch body 820 is coupled with another electronic device (e.g., a wearable band 810). Sensors 921 can include one or more imaging sensors 963 (e.g., one or more of cameras 925, and/or separate imaging sensors 963 (e.g., thermal-imaging sensors)). In some examples, sensors 921 can include one or more SpO2 sensors 964. In some examples, sensors 921 can include one or more biopotential-signal sensors (e.g., EMG sensors 965, which may be disposed on an interior, user-facing portion of watch body 820 and/or wearable band 810). In some examples, sensors 921 may include one or more capacitive sensors 966. In some examples, sensors 921 may include one or more heart rate sensors 967. In some examples, sensors 921 may include one or more IMU sensors 968. In some examples, one or more IMU sensors 968 can be configured to detect movement of a user's hand or other location where watch body 820 is placed or held.

In some examples, one or more of sensors 921 may provide an example human-machine interface. For example, a set of neuromuscular sensors, such as EMG sensors 965, may be arranged circumferentially around wearable band 810 with an interior surface of EMG sensors 965 being configured to contact a user's skin. Any suitable number of neuromuscular sensors may be used (e.g., between 2 and 20 sensors). The number and arrangement of neuromuscular sensors may depend on the particular application for which the wearable device is used. For example, wearable band 810 can be used to generate control information for controlling an augmented reality system, a robot, controlling a vehicle, scrolling through text, controlling a virtual avatar, or any other suitable control task.

In some examples, neuromuscular sensors may be coupled together using flexible electronics incorporated into the wireless device, and the output of one or more of the sensing components can be optionally processed using hardware signal processing circuitry (e.g., to perform amplification, filtering, and/or rectification). In other examples, at least some signal processing of the output of the sensing components can be performed in software such as processors 979. Thus, signal processing of signals sampled by the sensors can be performed in hardware, software, or by any suitable combination of hardware and software, as aspects of the technology described herein are not limited in this respect.

Neuromuscular signals may be processed in a variety of ways. For example, the output of EMG sensors 965 may be provided to an analog front end, which may be configured to perform analog processing (e.g., amplification, noise reduction, filtering, etc.) on the recorded signals. The processed analog signals may then be provided to an analog-to-digital converter, which may convert the analog signals to digital signals that can be processed by one or more computer processors. Furthermore, although this example is as discussed in the context of interfaces with EMG sensors, the examples described herein can also be implemented in wearable interfaces with other types of sensors including, but not limited to, mechanomyography (MMG) sensors, sonomyography (SMG) sensors, and electrical impedance tomography (EIT) sensors.

In some examples, peripherals interface 961 includes a near-field communication (NFC) component 969, a global-position system (GPS) component 970, a long-term evolution (LTE) component 971, and/or a Wi-Fi and/or Bluetooth communication component 972. In some examples, peripherals interface 961 includes one or more buttons 973 (e.g., peripheral buttons 823 and 827 in FIG. 8), which, when selected by a user, cause operation to be performed at watch body 820. In some examples, the peripherals interface 961 includes one or more indicators, such as a light emitting diode (LED), to provide a user with visual indicators (e.g., message received, low battery, active microphone and/or camera, etc.).

Watch body 820 can include at least one display 805 for displaying visual representations of information or data to a user, including user-interface elements and/or three-dimensional virtual objects. The display can also include a touch screen for inputting user inputs, such as touch gestures, swipe gestures, and the like. Watch body 820 can include at least one speaker 974 and at least one microphone 975 for providing audio signals to the user and receiving audio input from the user. The user can provide user inputs through microphone 975 and can also receive audio output from speaker 974 as part of a haptic event provided by haptic controller 978. Watch body 820 can include at least one camera 925, including a front camera 925a and a rear camera 925b. Cameras 925 can include ultra-wide-angle cameras, wide angle cameras, fish-eye cameras, spherical cameras, telephoto cameras, depth-sensing cameras, or other types of cameras.

Watch body computing system 960 can include one or more haptic controllers 978 and associated componentry (e.g., haptic devices 976) for providing haptic events at watch body 820 (e.g., a vibrating sensation or audio output in response to an event at the watch body 820). Haptic controllers 978 can communicate with one or more haptic devices 976, such as electroacoustic devices, including a speaker of the one or more speakers 974 and/or other audio components and/or electromechanical devices that convert energy into linear motion such as a motor, solenoid, electroactive polymer, piezoelectric actuator, electrostatic actuator, or other tactile output generating components (e.g., a component that converts electrical signals into tactile outputs on the device). Haptic controller 978 can provide haptic events to that are capable of being sensed by a user of watch body 820. In some examples, one or more haptic controllers 978 can receive input signals from an application of applications 982.

In some examples, wearable band computing system 930 and/or watch body computing system 960 can include memory 980, which can be controlled by one or more memory controllers of controllers 977. In some examples, software components stored in memory 980 include one or more applications 982 configured to perform operations at the watch body 820. In some examples, one or more applications 982 may include games, word processors, messaging applications, calling applications, web browsers, social media applications, media streaming applications, financial applications, calendars, clocks, etc. In some examples, software components stored in memory 980 include one or more communication interface modules 983 as defined above. In some examples, software components stored in memory 980 include one or more graphics modules 984 for rendering, encoding, and/or decoding audio and/or visual data and one or more data management modules 985 for collecting, organizing, and/or providing access to data 987 stored in memory 980. In some examples, one or more of applications 982 and/or one or more modules can work in conjunction with one another to perform various tasks at the watch body 820.

In some examples, software components stored in memory 980 can include one or more operating systems 981 (e.g., a Linux-based operating system, an Android operating system, etc.). Memory 980 can also include data 987. Data 987 can include profile data 988A, sensor data 989A, media content data 990, and application data 991.

It should be appreciated that watch body computing system 960 is an example of a computing system within watch body 820, and that watch body 820 can have more or fewer components than shown in watch body computing system 960, can combine two or more components, and/or can have a different configuration and/or arrangement of the components. The various components shown in watch body computing system 960 are implemented in hardware, software, firmware, or a combination thereof, including one or more signal processing and/or application-specific integrated circuits.

Turning to the wearable band computing system 930, one or more components that can be included in wearable band 810 are shown. Wearable band computing system 930 can include more or fewer components than shown in watch body computing system 960, can combine two or more components, and/or can have a different configuration and/or arrangement of some or all of the components. In some examples, all, or a substantial portion of the components of wearable band computing system 930 are included in a single integrated circuit. Alternatively, In some examples, components of wearable band computing system 930 are included in a plurality of integrated circuits that are communicatively coupled. As described above, In some examples, wearable band computing system 930 is configured to couple (e.g., via a wired or wireless connection) with watch body computing system 960, which allows the computing systems to share components, distribute tasks, and/or perform other operations described herein (individually or as a single device).

Wearable band computing system 930, similar to watch body computing system 960, can include one or more processors 949, one or more controllers 947 (including one or more haptics controllers 948), a peripherals interface 931 that can includes one or more sensors 913 and other peripheral devices, a power source (e.g., a power system 956), and memory (e.g., a memory 950) that includes an operating system (e.g., an operating system 951), data (e.g., data 954 including profile data 988B, sensor data 989B, etc.), and one or more modules (e.g., a communications interface module 952, a data management module 953, etc.).

One or more of sensors 913 can be analogous to sensors 921 of watch body computing system 960. For example, sensors 913 can include one or more coupling sensors 932, one or more SpO2 sensors 934, one or more EMG sensors 935, one or more capacitive sensors 936, one or more heart rate sensors 937, and one or more IMU sensors 938.

Peripherals interface 931 can also include other components analogous to those included in peripherals interface 961 of watch body computing system 960, including an NFC component 939, a GPS component 940, an LTE component 941, a Wi-Fi and/or Bluetooth communication component 942, and/or one or more haptic devices 946 as described above in reference to peripherals interface 961. In some examples, peripherals interface 931 includes one or more buttons 943, a display 933, a speaker 944, a microphone 945, and a camera 955. In some examples, peripherals interface 931 includes one or more indicators, such as an LED.

It should be appreciated that wearable band computing system 930 is an example of a computing system within wearable band 810, and that wearable band 810 can have more or fewer components than shown in wearable band computing system 930, combine two or more components, and/or have a different configuration and/or arrangement of the components. The various components shown in wearable band computing system 930 can be implemented in one or more of a combination of hardware, software, or firmware, including one or more signal processing and/or application-specific integrated circuits.

Wrist-wearable device 800 with respect to FIG. 8 is an example of wearable band 810 and watch body 820 coupled together, so wrist-wearable device 800 will be understood to include the components shown and described for wearable band computing system 930 and watch body computing system 960. In some examples, wrist-wearable device 800 has a split architecture (e.g., a split mechanical architecture, a split electrical architecture, etc.) between watch body 820 and wearable band 810. In other words, all of the components shown in wearable band computing system 930 and watch body computing system 960 can be housed or otherwise disposed in a combined wrist-wearable device 800 or within individual components of watch body 820, wearable band 810, and/or portions thereof (e.g., a coupling mechanism 816 of wearable band 810).

The techniques described above can be used with any device for sensing neuromuscular signals but could also be used with other types of wearable devices for sensing neuromuscular signals (such as body-wearable or head-wearable devices that might have neuromuscular sensors closer to the brain or spinal column).

In some examples, wrist-wearable device 800 can be used in conjunction with a head-wearable device (e.g., AR glasses 1000 and VR system 1110) and/or an HIPD described below, and wrist-wearable device 800 can also be configured to be used to allow a user to control any aspect of the artificial reality (e.g., by using EMG-based gestures to control user interface objects in the artificial reality and/or by allowing a user to interact with the touchscreen on the wrist-wearable device to also control aspects of the artificial reality). Having thus described example wrist-wearable devices, attention will now be turned to example head-wearable devices, such AR glasses 1000 and VR headset 1110.

FIGS. 10 to 12 show example artificial-reality systems, which can be used as or in connection with wrist-wearable device 800. In some examples, AR system 1000 includes an eyewear device 1002, as shown in FIG. 10. In some examples, VR system 1110 includes a head-mounted display (HMD) 1112, as shown in FIGS. 11A and 11B. In some examples, AR system 1000 and VR system 1110 can include one or more analogous components (e.g., components for presenting interactive artificial-reality environments, such as processors, memory, and/or presentation devices, including one or more displays and/or one or more waveguides), some of which are described in more detail with respect to FIG. 12. As described herein, a head-wearable device can include components of eyewear device 1002 and/or head-mounted display 1112. Some examples of head-wearable devices do not include any displays, including any of the displays described with respect to AR system 1000 and/or VR system 1110. While the example artificial-reality systems are respectively described herein as AR system 1000 and VR system 1110, either or both of the example AR systems described herein can be configured to present fully-immersive virtual-reality scenes presented in substantially all of a user's field of view or subtler augmented-reality scenes that are presented within a portion, less than all, of the user's field of view.

FIG. 10 show an example visual depiction of AR system 1000, including an eyewear device 1002 (which may also be described herein as augmented-reality glasses, and/or smart glasses). AR system 1000 can include additional electronic components that are not shown in FIG. 10, such as a wearable accessory device and/or an intermediary processing device, in electronic communication or otherwise configured to be used in conjunction with the eyewear device 1002. In some examples, the wearable accessory device and/or the intermediary processing device may be configured to couple with eyewear device 1002 via a coupling mechanism in electronic communication with a coupling sensor 1224 (FIG. 12), where coupling sensor 1224 can detect when an electronic device becomes physically or electronically coupled with eyewear device 1002. In some examples, eyewear device 1002 can be configured to couple to a housing 1290 (FIG. 12), which may include one or more additional coupling mechanisms configured to couple with additional accessory devices. The components shown in FIG. 10 can be implemented in hardware, software, firmware, or a combination thereof, including one or more signal-processing components and/or application-specific integrated circuits (ASICs).

Eyewear device 1002 includes mechanical glasses components, including a frame 1004 configured to hold one or more lenses (e.g., one or both lenses 1006-1 and 1006-2). One of ordinary skill in the art will appreciate that eyewear device 1002 can include additional mechanical components, such as hinges configured to allow portions of frame 1004 of eyewear device 1002 to be folded and unfolded, a bridge configured to span the gap between lenses 1006-1 and 1006-2 and rest on the user's nose, nose pads configured to rest on the bridge of the nose and provide support for eyewear device 1002, earpieces configured to rest on the user's ears and provide additional support for eyewear device 1002, temple arms configured to extend from the hinges to the earpieces of eyewear device 1002, and the like. One of ordinary skill in the art will further appreciate that some examples of AR system 1000 can include none of the mechanical components described herein. For example, smart contact lenses configured to present artificial reality to users may not include any components of eyewear device 1002.

Eyewear device 1002 includes electronic components, many of which will be described in more detail below with respect to FIG. 10. Some example electronic components are illustrated in FIG. 10, including acoustic sensors 1025-1, 1025-2, 1025-3, 1025-4, 1025-5, and 1025-6, which can be distributed along a substantial portion of the frame 1004 of eyewear device 1002. Eyewear device 1002 also includes a left camera 1039A and a right camera 1039B, which are located on different sides of the frame 1004. Eyewear device 1002 also includes a processor 1048 (or any other suitable type or form of integrated circuit) that is embedded into a portion of the frame 1004.

FIGS. 11A and 11B show a VR system 1110 that includes a head-mounted display (HMD) 1112 (e.g., also referred to herein as an artificial-reality headset, a head-wearable device, a VR headset, etc.). As noted, some artificial-reality systems (e.g., AR system 1000) may, instead of blending an artificial reality with actual reality, substantially replace one or more of a user's visual and/or other sensory perceptions of the real world with a virtual experience (e.g., AR systems 600 and 700).

HMD 1112 includes a front body 1114 and a frame 1116 (e.g., a strap or band) shaped to fit around a user's head. In some examples, front body 1114 and/or frame 1116 include one or more electronic elements for facilitating presentation of and/or interactions with an AR and/or VR system (e.g., displays, IMUs, tracking emitter or detectors). In some examples, HMD 1112 includes output audio transducers (e.g., an audio transducer 1118), as shown in FIG. 11B. In some examples, one or more components, such as the output audio transducer(s) 1118 and frame 1116, can be configured to attach and detach (e.g., are detachably attachable) to HMD 1112 (e.g., a portion or all of frame 1116, and/or audio transducer 1118), as shown in FIG. 11B. In some examples, coupling a detachable component to HMD 1112 causes the detachable component to come into electronic communication with HMD 1112.

FIGS. 11A and 11B also show that VR system 1110 includes one or more cameras, such as left camera 1139A and right camera 1139B, which can be analogous to left and right cameras 1039A and 1039B on frame 1004 of eyewear device 1002. In some examples, VR system 1110 includes one or more additional cameras (e.g., cameras 1139C and 1139D), which can be configured to augment image data obtained by left and right cameras 1139A and 1139B by providing more information. For example, camera 1139C can be used to supply color information that is not discerned by cameras 1139A and 1139B. In some examples, one or more of cameras 1139A to 1139D can include an optional IR cut filter configured to remove IR light from being received at the respective camera sensors.

FIG. 12 illustrates a computing system 1220 and an optional housing 1290, each of which show components that can be included in AR system 1000 and/or VR system 1110. In some examples, more or fewer components can be included in optional housing 1290 depending on practical restraints of the respective AR system being described.

In some examples, computing system 1220 can include one or more peripherals interfaces 1222A and/or optional housing 1290 can include one or more peripherals interfaces 1222B. Each of computing system 1220 and optional housing 1290 can also include one or more power systems 1242A and 1242B, one or more controllers 1246 (including one or more haptic controllers 1247), one or more processors 1248A and 1248B (as defined above, including any of the examples provided), and memory 1250A and 1250B, which can all be in electronic communication with each other. For example, the one or more processors 1248A and 1248B can be configured to execute instructions stored in memory 1250A and 1250B, which can cause a controller of one or more of controllers 1246 to cause operations to be performed at one or more peripheral devices connected to peripherals interface 1222A and/or 1222B. In some examples, each operation described can be powered by electrical power provided by power system 1242A and/or 1242B.

In some examples, peripherals interface 1222A can include one or more devices configured to be part of computing system 1220, some of which have been defined above and/or described with respect to the wrist-wearable devices shown in FIGS. 8 and 9. For example, peripherals interface 1222A can include one or more sensors 1223A. Some example sensors 1223A include one or more coupling sensors 1224, one or more acoustic sensors 1225, one or more imaging sensors 1226, one or more EMG sensors 1227, one or more capacitive sensors 1228, one or more IMU sensors 1229, and/or any other types of sensors explained above or described with respect to any other examples discussed herein.

In some examples, peripherals interfaces 1222A and 1222B can include one or more additional peripheral devices, including one or more NFC devices 1230, one or more GPS devices 1231, one or more LTE devices 1232, one or more Wi-Fi and/or Bluetooth devices 1233, one or more buttons 1234 (e.g., including buttons that are slidable or otherwise adjustable), one or more displays 1235A and 1235B, one or more speakers 1236A and 1236B, one or more microphones 1237, one or more cameras 1238A and 1238B (e.g., including the left camera 1239A and/or a right camera 1239B), one or more haptic devices 1240, and/or any other types of peripheral devices defined above or described with respect to any other examples discussed herein.

AR systems can include a variety of types of visual feedback mechanisms (e.g., presentation devices). For example, display devices in AR system 1000 and/or VR system 1110 can include one or more liquid-crystal displays (LCDs), light emitting diode (LED) displays, organic LED (OLED) displays, and/or any other suitable types of display screens. Artificial-reality systems can include a single display screen (e.g., configured to be seen by both eyes), and/or can provide separate display screens for each eye, which can allow for additional flexibility for varifocal adjustments and/or for correcting a refractive error associated with a user's vision. Some examples of AR systems also include optical subsystems having one or more lenses (e.g., conventional concave or convex lenses, Fresnel lenses, or adjustable liquid lenses) through which a user can view a display screen.

For example, respective displays 1235A and 1235B can be coupled to each of the lenses 1006-1 and 1006-2 of AR system 1000. Displays 1235A and 1235B may be coupled to each of lenses 1006-1 and 1006-2, which can act together or independently to present an image or series of images to a user. In some examples, AR system 1000 includes a single display 1235A or 1235B (e.g., a near-eye display) or more than two displays 1235A and 1235B. In some examples, a first set of one or more displays 1235A and 1235B can be used to present an augmented-reality environment, and a second set of one or more display devices 1235A and 1235B can be used to present a virtual-reality environment. In some examples, one or more waveguides are used in conjunction with presenting artificial-reality content to the user of AR system 1000 (e.g., as a means of delivering light from one or more displays 1235A and 1235B to the user's eyes). In some examples, one or more waveguides are fully or partially integrated into the eyewear device 1002. Additionally, or alternatively to display screens, some artificial-reality systems include one or more projection systems. For example, display devices in AR system 1000 and/or VR system 1110 can include micro-LED projectors that project light (e.g., using a waveguide) into display devices, such as clear combiner lenses that allow ambient light to pass through. The display devices can refract the projected light toward a user's pupil and can enable a user to simultaneously view both artificial-reality content and the real world. Artificial-reality systems can also be configured with any other suitable type or form of image projection system. In some examples, one or more waveguides are provided additionally or alternatively to the one or more display(s) 1235A and 1235B.

Computing system 1220 and/or optional housing 1290 of AR system 1000 or VR system 1110 can include some or all of the components of a power system 1242A and 1242B. Power systems 1242A and 1242B can include one or more charger inputs 1243, one or more PMICs 1244, and/or one or more batteries 1245A and 1244B.

Memory 1250A and 1250B may include instructions and data, some or all of which may be stored as non-transitory computer-readable storage media within the memories 1250A and 1250B. For example, memory 1250A and 1250B can include one or more operating systems 1251, one or more applications 1252, one or more communication interface applications 1253A and 1253B, one or more graphics applications 1254A and 1254B, one or more AR processing applications 1255A and 1255B, and/or any other types of data defined above or described with respect to any other examples discussed herein.

Memory 1250A and 1250B also include data 1260A and 1260B, which can be used in conjunction with one or more of the applications discussed above. Data 1260A and 1260B can include profile data 1261, sensor data 1262A and 1262B, media content data 1263A, AR application data 1264A and 1264B, and/or any other types of data defined above or described with respect to any other examples discussed herein.

In some examples, controller 1246 of eyewear device 1002 may process information generated by sensors 1223A and/or 1223B on eyewear device 1002 and/or another electronic device within AR system 1000. For example, controller 1246 can process information from acoustic sensors 1025-1 and 1025-2. For each detected sound, controller 1246 can perform a direction of arrival (DOA) estimation to estimate a direction from which the detected sound arrived at eyewear device 1002 of R system 1000. As one or more of acoustic sensors 1225 (e.g., the acoustic sensors 1025-1, 1025-2) detects sounds, controller 1246 can populate an audio data set with the information (e.g., represented in FIG. 10 as sensor data 1262A and 1262B).

In some examples, a physical electronic connector can convey information between eyewear device 1002 and another electronic device and/or between one or more processors 1048, 1248A, 1248B of AR system 1000 or VR system 1110 and controller 1246. The information can be in the form of optical data, electrical data, wireless data, or any other transmittable data form. Moving the processing of information generated by eyewear device 1002 to an intermediary processing device can reduce weight and heat in the eyewear device, making it more comfortable and safer for a user. In some examples, an optional wearable accessory device (e.g., an electronic neckband) is coupled to eyewear device 1002 via one or more connectors. The connectors can be wired or wireless connectors and can include electrical and/or non-electrical (e.g., structural) components. In some examples, eyewear device 1002 and the wearable accessory device can operate independently without any wired or wireless connection between them.

In some situations, pairing external devices, such as an intermediary processing device (e.g., HIPD 406, 506, 606) with eyewear device 1002 (e.g., as part of AR system 1000) enables eyewear device 1002 to achieve a similar form factor of a pair of glasses while still providing sufficient battery and computation power for expanded capabilities. Some, or all, of the battery power, computational resources, and/or additional features of AR system 1000 can be provided by a paired device or shared between a paired device and eyewear device 1002, thus reducing the weight, heat profile, and form factor of eyewear device 1002 overall while allowing eyewear device 1002 to retain its desired functionality. For example, the wearable accessory device can allow components that would otherwise be included on eyewear device 1002 to be included in the wearable accessory device and/or intermediary processing device, thereby shifting a weight load from the user's head and neck to one or more other portions of the user's body. In some examples, the intermediary processing device has a larger surface area over which to diffuse and disperse heat to the ambient environment. Thus, the intermediary processing device can allow for greater battery and computation capacity than might otherwise have been possible on eyewear device 1002 standing alone. Because weight carried in the wearable accessory device can be less invasive to a user than weight carried in the eyewear device 1002, a user may tolerate wearing a lighter eyewear device and carrying or wearing the paired device for greater lengths of time than the user would tolerate wearing a heavier eyewear device standing alone, thereby enabling an artificial-reality environment to be incorporated more fully into a user's day-to-day activities.

AR systems can include various types of computer vision components and subsystems. For example, AR system 1000 and/or VR system 1110 can include one or more optical sensors such as two-dimensional (2D) or three-dimensional (3D) cameras, time-of-flight depth sensors, structured light transmitters and detectors, single-beam or sweeping laser rangefinders, 3D LiDAR sensors, and/or any other suitable type or form of optical sensor. An AR system can process data from one or more of these sensors to identify a location of a user and/or aspects of the use's real-world physical surroundings, including the locations of real-world objects within the real-world physical surroundings. In some examples, the methods described herein are used to map the real world, to provide a user with context about real-world surroundings, and/or to generate digital twins (e.g., interactable virtual objects), among a variety of other functions. For example, FIGS. 11A and 11B show VR system 1110 having cameras 1139Ato 1139D, which can be used to provide depth information for creating a voxel field and a two-dimensional mesh to provide object information to the user to avoid collisions.

In some examples, AR system 1000 and/or VR system 1110 can include haptic (tactile) feedback systems, which may be incorporated into headwear, gloves, body suits, handheld controllers, environmental devices (e.g., chairs or floormats), and/or any other type of device or system, such as the wearable devices discussed herein. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback may be implemented using motors, piezoelectric actuators, fluidic systems, and/or a variety of other types of feedback mechanisms. The haptic feedback systems may be implemented independently of other artificial-reality devices, within other artificial-reality devices, and/or in conjunction with other artificial-reality devices.

In some examples of an artificial reality system, such as AR system 1000 and/or VR system 1110, ambient light (e.g., a live feed of the surrounding environment that a user would normally see) can be passed through a display element of a respective head-wearable device presenting aspects of the AR system. In some examples, ambient light can be passed through a portion less that is less than all of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable device, and an amount of ambient light (e.g., 15-50% of the ambient light) can be passed through the user interface element such that the user can distinguish at least a portion of the physical environment over which the user interface element is being displayed.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device and at least one physical processor.

In some examples, the term "memory device" generally refers to any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In some examples, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain examples one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

In some examples, the term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

The preceding description has been provided to enable others skilled in the art to best utilize various aspects of the examples disclosed herein. This example description is not intended to be exhaustive or to be limited to any precise form disclosed. Many modifications and variations are possible without departing from the scope of the present disclosure. The examples disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A display system comprising:
a housing comprising an inner surface;
a display device comprising a surface; and
a heat spreader coupled to the surface and the inner surface to thermally couple the display device to the housing.

2. The display system of claim 1, wherein the display device is configured to move within the housing and the heat spreader comprises a flexible material.

3. The display system of claim 2, wherein the heat spreader comprises a thermally conductive film in a strap.

4. The display system of claim 3, wherein a length of the strap allows the display device to move within the housing.

5. The display system of claim 4, wherein the display device is offset from the inner surface to define a space between the housing and the display device, and the length of the strap allows the strap to bend around the space.

6. The display system of claim 5, wherein the strap comprises a connecting surface, a first portion of the connecting surface is coupled to the surface and a second portion of the connecting surface is coupled to the inner surface.

7. The display system of claim 6, wherein an orientation of the strap corresponds to a direction of movement for the display device.

8. The display system of any preceding claim, wherein the display device is configured to move to adjust an inter-axial distance for a user.

9. The display system of any preceding claim, wherein the heat spreader comprises at least one of:
an aluminum material;
a copper material; or
a graphite film material.

10. The display system of any preceding claim, further comprising:
a second display device comprising a second surface; and
a second heat spreader coupled to the second surface and the inner surface to thermally couple the second display device to the housing.

11. The display system of claim 10, wherein the second display device is configured to move within the housing to adjust an inter-axial distance between the first display device and the second display device.

12. The display system of claim 11, wherein the second heat spreader comprises a second flexible material and a second thermally conductive film in a second strap.

13. A head-mounted display comprising the display system of any preceding claim.

14. A method comprising:
attaching a heat spreader to an inner surface of a housing of a head-mounted display;
attaching the heat spreader to a surface of a display device of the head-mounted display; and
positioning the display device inside the housing.
